# EUROPEAN PATENT APPLICATION

(11) **EP 4 494 534 A1**
(43) Date of publication of application: **22.01.2025**
(21) Application number: 24188751.2
(22) Date of filing: 16.07.2024
(51) Int. Cl.: A47J 37/06

(54) **TEMPERATURE-ADJUSTABLE OUTDOOR AIR FRYER**

(30) Priority: 18.07.2023 CN 202310880363; 18.07.2023 CN 202310882837; 18.07.2023 CN 202310880944; 18.07.2023 CN 202310880389
(71) Applicant: Ningbo Careline Electric Appliance Co., Ltd., Ningbo, Zhejiang 315000 (CN)
(72) Inventor: Zhang, Yichi, Ningbo, 315000 (CN); Pan, Huayuan, Ningbo, 315000 (CN); Bai, Rongjie, Ningbo, 315000 (CN); Huo, Zhian, Ningbo, 315000 (CN)
(74) Representative: Patentanwaltskanzlei Matschnig & Forsthuber OG

(57) **Abstract**

Disclosed is a temperature-adjustable outdoor air fryer. The air fryer is provided therein with a cooking cavity, an external circulation air duct is provided outside the cooking cavity, a temperature-control fan and a heat generating source configured to cooperate with an outer wall of the cooking cavity through thermal transfer are provided in the external circulation air duct, and the heat generating source is a relevant heat generating item susceptible to oxygen content; the air fryer is further provided therein with a control system and a variable-speed drive motor and a temperature sensor which are electrically connected to the control system, wherein the drive motor is connected to the temperature-control fan, and the temperature sensor extends into the cooking cavity. For the air fryer, by providing in the external circulation air duct the heat generating source susceptible to oxygen content, and providing in the air fryer the control system, the drive motor and the temperature sensor which cooperate with each other, it can be realized that a burning rate of the heat generating source is automatically adjusted, further the temperature in the cooking cavity is controlled, and the cooking efficiency and cooking effect are improved.

## Description

### TECHNICAL FIELD

The present application relates to the technical field of kitchen appliances and cooking appliances, specifically to an air fryer, and particularly to a temperature-adjustable outdoor air fryer.

### BACKGROUND ART

There are many types of existing air fryers, while most of the air fryers use electric heating for cooking food. By providing in the air fryer an electric heating device capable of heating air and a circulation fan, food is cooked by a high-speed circulating heat flow produced by cooperation between the electric heating device and the circulation fan. Although such air fryer is convenient to use at home, because of its high power consumption, it can only be plugged for use at home or used in places with electricity, and cannot be carried outdoors for use, thus being quite restricted in use. Although some air fryers using a combustible heat generating source for heating can be carried outdoors for use, because there is no temperature control system to automatically adjust a burning rate of the heat generating source, the temperature is uncontrollable, the cooking effect is poor, and the user experience is unfavorable.

### SUMMARY

In the first aspect, a temperature-adjustable outdoor air fryer is provided, including a shell, wherein the shell is provided therein with a cooking cavity and a hot air circulation system communicating with the cooking cavity; an external circulation air duct is provided outside the cooking cavity, the external circulation air duct is provided therein with a heat generating source configured to be in thermal contact and cooperate with an outer wall of the cooking cavity, and the heat generating source is a relevant heat generating item susceptible to oxygen content; the shell is provided therein with a control system, and a drive motor and a temperature sensor which are electrically connected to the control system, wherein the drive motor is a variable-speed motor, and the temperature sensor is configured to extend into the cooking cavity; the shell is provided with an air vent communicating with the external circulation air duct, and a temperature-control fan connected to the drive motor is provided in the external circulation air duct.

In the second aspect, a temperature-adjustable outdoor air fryer is provided, including a shell, wherein the shell is provided therein with a cooking cavity and a hot air circulation system communicating with the cooking cavity; the shell is provided therein with a control system, and a temperature sensor and a drive system which are electrically connected to the control system, wherein the drive system has a forward drive state and a reverse drive state, and the temperature sensor extends into the cooking cavity; an air-blowing channel is provided outside the cooking cavity, a heat generating source configured to be in thermal contact and cooperate with an outer wall of the cooking cavity is provided in the air-blowing channel, and the heat generating source is a relevant heat generating item susceptible to oxygen content; and the shell is provided with an air vent communicating with the air-blowing channel, and a temperature-control fan connected to the drive system is provided in the air-blowing channel.

In the third aspect, a temperature-adjustable outdoor air fryer is provided, including a shell, wherein the shell is provided therein with a cooking cavity, a circulation air duct communicating with the cooking cavity is provided outside the cooking cavity, the shell is provided with an air vent communicating with the circulation air duct; a heat generating source configured to be in thermal contact and cooperate with an outer wall of the cooking cavity is provided in the circulation air duct; the shell is provided therein with a control system and a drive system electrically connected to the control system; the circulation air duct or the cooking cavity is provided therein with a fan assembly connected to the drive system, and air heated by the heat generating source in the circulation air duct is adapted to be driven by the fan assembly to the cooking cavity.

In the fourth aspect, a temperature-adjustable outdoor air fryer is provided, including a shell, wherein the shell is provided therein with a cooking cavity, a heating cavity is provided outside the cooking cavity, and the heating cavity is provided therein with a heat generating source configured to be in thermal contact and cooperate with an outer wall of the cooking cavity; the shell is provided with an air outlet communicating with the cooking cavity and an external space, the shell is provided therein with a control system, and a drive motor and a temperature sensor which are electrically connected to the control system, wherein the drive motor is a variable-speed motor, and the temperature sensor is configured to extend into the cooking cavity; and a hot air circulation system communicating with the cooking cavity is provided in the shell, wherein the hot air circulation system includes a circulation fan, and the circulation fan is in driving connection with the drive motor.

### BRIEF DESCRIPTION OF DRAWINGS

In order to more clearly illustrate the technical solutions in embodiments of the present application or in the prior art, drawings which need to be used in the description of the embodiments or the prior art will be briefly introduced below. Apparently, the drawings in the description below merely show some embodiments of the present application, and those ordinarily skilled in the art still could obtain other drawings in light of these drawings without using any inventive efforts.
FIG. 1 is an overall structural schematic diagram of an air fryer in a first embodiment of the present application.
FIG. 2 is an exploded structural schematic diagram of the air fryer in the first embodiment of the present application.
FIG. 3 is a sectional view of the air fryer in the first embodiment of the present application.
FIG. 4 is an exploded structural schematic diagram of an air fryer in a second embodiment of the present application.
FIG. 5 is a sectional view of the air fryer in the second embodiment of the present application.
FIG. 6 is an exploded structural schematic diagram of an air fryer in a third embodiment of the present application.
FIG. 7 is a sectional view of the air fryer in the third embodiment of the present application.
FIG. 8 is a top view of an internal structure of the air fryer in the third embodiment of the present application.
FIG. 9 is an overall schematic diagram of an air fryer in a fourth embodiment of the present application.
FIG. 10 is a schematic diagram of the air fryer in the fourth embodiment of the present application in a cooling state.
FIG. 11 is a schematic diagram of the air fryer in the fourth embodiment of the present application in a heating state.
FIG. 12 is a schematic diagram of an air fryer in a fifth embodiment of the present application in a heating state.
FIG. 13 is an overall structural schematic diagram of an air fryer in a sixth embodiment of the present application.
FIG. 14 is an exploded structural schematic diagram of the air fryer in the sixth embodiment of the present application.
FIG. 15 is a sectional view of the air fryer in the sixth embodiment of the present application.
FIG. 16 is an overall structural schematic diagram of an air fryer in an eighth embodiment of the present application.
FIG. 17 is an exploded structural schematic diagram of the air fryer in the eighth embodiment of the present application.
FIG. 18 is a sectional structural view of the air fryer in the eighth embodiment of the present application.

Reference signs: 10 (10A 10B)-shell; 11-cooking cavity; 12 (12A 12B)-external circulation air duct; 13 (13A)-air vent; 131 (131A)-air inlet; 132 (132A)-air outlet; 14 (14A)-temperature-control fan; 15-temperature sensor; 16 (16A)-control cavity; 17 (17A)-thermal baffle; 171A-communicating port; 18-support leg; 19B-auxiliary air port; 20-hot air circulation system; 30 (30A 30B)-heat generating source; 40 (40A)-control system; 50 (SOA)-drive motor; 60-bottom plate; 61-storage cavity; 70-frying pot; 71-food placement cavity; 72-handle; 80B-air guide cover; 510-shell; 511-cooking cavity; 512-air-blowing channel; 513-airvent; 5131-first air vent; 5132 second air vent; 514-temperature-control fan; 515 (515A)-fryingpot; 5151A-hot air gap; 516-food tray; 517A-frying basket; 5171A-food placement cavity; 5172A-hot air port; 518-charging jack; 520-hot air circulation system; 530-heat generating source; 540-control system; 550-temperature sensor; 560-drive system; 561-drive motor; 570-solar power supply system; 571-solar energy conversion assembly; 572-battery assembly; 610-shell; 611-cooking cavity; 6111-communicating port; 612-circulation air duct; 613-air vent; 614-heat generating source; 615-fan assembly; 616-temperature sensor; 617-support leg; 618-frying pot; 6181-accommodating cavity; 6182-handle; 619-air outlet; 620-control system; 630-drive system; 631-drive motor; 640-bottom plate; 641-storage cavity; 650-smoke dust filtering device; 660-air outlet assembly; 661-air outlet channel; 710-shell; 711-cooking cavity; 712-heating cavity; 713-air vent; 714-support leg; 715-air outlet; 716-temperature sensor; 717-mounting cavity; 718-air duct plate; 719-heat dissipation assembly; 720-hot air circulation system; 730-heat generating source; 740-control system; 750-drive motor; 760-bottom plate; 770-air outlet assembly; 780-frying pot; 781-food placement cavity; 782-handle; 790-hand grip.

### DETAILED DESCRIPTION OF EMBODIMENTS

The present application provides a temperature-adjustable outdoor air fryer, so as to solve the technical problems of uncontrollable temperature, bad cooking effect, and poor user experience of the existing air fryers.

In order to solve the above technical problems, the present application provides a temperature-adjustable outdoor air fryer, including a shell, wherein the shell is provided therein with a cooking cavity and a hot air circulation system communicating with the cooking cavity; an external circulation air duct is provided outside the cooking cavity, the external circulation air duct is provided therein with a heat generating source configured to be in thermal contact and cooperate with an outer wall of the cooking cavity, and the heat generating source is a relevant heat generating item susceptible to oxygen content; the shell is provided therein with a control system and a drive motor and a temperature sensor which are electrically connected to the control system, wherein the drive motor is a variable-speed motor, and the temperature sensor is suitable to extend into the cooking cavity; the shell is provided with an air vent communicating with the external circulation air duct, and a temperature-control fan connected to the drive motor is provided in the external circulation air duct. For the air fryer, by providing the heat generating source susceptible to oxygen content in the external circulation air channel, and providing in the shell the control system and the drive motor and the temperature sensor which are electrically connected to the control system, the air fryer can automatically adjust an amount and a speed of ambient air entering the external circulation air duct, so as to realize control over a burning rate of the heat generating source, and further realize automatic adjustment of a cooking temperature in the cooking cavity, thus improving the cooking effect and use experience of a user.

In an optional embodiment, the air vent includes an air inlet and an air outlet, wherein the air inlet and the air outlet are located at two ends of the external circulation air duct, the air inlet is provided adjacent to the heat generating source, and the air outlet is provided adjacent to the temperature-control fan. The air inlet is provided adjacent to the heat generating source, so that when the ambient air enters the external circulation air duct through the air inlet, oxygen gas in the air can quickly contact the heat generating source and promote the burning of the heat generating source, thus realizing rapid heating. Meanwhile, the temperature-control fan is provided adjacent to the air outlet, so that the heat flow in the external circulation air duct can be quickly discharged, thus realizing rapid cooling.

In an optional embodiment, the air inlet is provided at a bottom of the shell, support legs extending downwards and a detachable bottom plate are provided at the bottom of the shell, and the shell is suitable to be suspended above the bottom plate through the support legs. The air inlet is provided at the bottom of the shell, so that the air inlet can be hidden, thus elevating overall aesthetics of the air fryer. Meanwhile, the support legs are suitable to suspend the shell, so as to reserve sufficient space at the bottom of the shell for airflow to pass therethrough and ensure normal progress of the cooking. Besides, the bottom plate is suitable to play a supporting role, and in outdoor use, the bottom plate is suitable to provide a steady support plane, so as to ensure normal cooking of the air fryer when being used outdoors, and moreover, the bottom plate further can receive burning residues falling down from the air vent, to avoid affecting the environment and causing fires, and ensure use safety of air fryer products.

In an optional embodiment, the bottom plate has a storage cavity with an open top, and the shell is provided to be suspended in the storage cavity. With the storage cavity, the bottom plate can be used in combination with the shell, and can also be used alone as a container, thus effectively improving the practicability of the air fryer.

In an optional embodiment, the shell is provided therein with a control cavity, wherein the control cavity is located outside the external circulation air duct, and the control cavity is provided therein with the control system and the drive motor; and a thermal baffle is provided between the control cavity and the external circulation air duct, and a periphery of the thermal baffle is configured to extend outwards and then abut against an inner wall of the shell. The thermal baffle is configured to separate the control cavity from the external circulation air duct, so as to prevent the heat flow in the external circulation air duct from flowing into the control cavity, to damage the control system and the drive motor in the control cavity.

In an optional embodiment, the air vent includes an air inlet and an air outlet, wherein the air inlet is provided on a top of the shell and communicates with the control cavity, and the air outlet is provided at a bottom of the shell and communicates with the external circulation air duct; and the thermal baffle is provided with a communicating port communicating with the control cavity and the external circulation air duct. The air inlet is provided on the top of the shell and communicates with the control cavity, and the communicating port is provided on the thermal baffle, so that the ambient air, when entering the external circulation air duct through the air inlet, flows through the control cavity to cool the control cavity, which can effectively reduce the temperature of the control cavity.

In an optional embodiment, an auxiliary air port is provided on a side of the shell, the shell is provided therein with an air guide cover communicating with the auxiliary air port and the external circulation air duct, and combustion-inhibiting substances produced by the burning of the heat generating source in the external circulation air duct are suitable to be guided by the air guide cover to the auxiliary air port. The auxiliary air port can accelerate discharging of the combustion-inhibiting substances in the external circulation air duct, and increase the burning rate of the heat generating source, thus improving the cooking efficiency,

In an optional embodiment, a frying pot is detachably provided in the shell, a handle is provided on a side or a top of the frying pot, an outer wall of the frying pot at least partially constitutes the outer wall of the cooking cavity, the heat generating source is provided to be sandwiched between the frying pot and the shell, and a food tray or a food basket is provided in the frying pot. The frying pot is detachably provided in the shell, and the heat generating source is provided to be sandwiched between the shell and the frying pot, so that it is convenient to take and place cooked or to-be-cooked food, and it is also easy to replace the heat generating source, thus improving use convenience of the air fryer.

In an optional embodiment, the heat generating source is detachably provided in the circulation air duct beside and/or below the cooking cavity, and cooperates with the outer wall of the cooking cavity through thermal transfer. The heat generating source is detachably provided in the circulation air duct beside and/or below the cooking cavity, so that the heat generating source can better cooperate with the outer wall of the cooking cavity through thermal transfer, and replacement of the heat generating source can also be realized, thus ensuring normal progress of the cooking.

In an optional embodiment, the heat generating source is coal, charcoal, alcohol, gas stove or wood. The coal, charcoal, alcohol, gas stove or wood, which is chosen as the heat generating source, on one hand, is convenient to carry, and on the other hand, is widely available and cost-effective for use, and thus practicability of air fryer products can be effectively improved.

The present application provides a temperature-adjustable outdoor air fryer, so as to solve the technical problems that the existing air fryers cannot be carried outdoors for use and have many use restrictions.

In order to solve the above technical problems, the present application provides a temperature-adjustable outdoor air fryer, wherein the air fryer includes a shell, the shell is provided therein with a cooking cavity and a hot air circulation system communicating with the cooking cavity; the shell is provided therein with a control system and a temperature sensor and a drive system which are electrically connected to the control system, and wherein the drive system has a forward drive state and a reverse drive state, and the temperature sensor extends into the cooking cavity; an air-blowing channel is provided outside the cooking cavity, a heat generating source for being in thermal contact and cooperating with an outer wall of the cooking cavity is provided in the air-blowing channel, and the heat generating source is a relevant heat generating item susceptible to oxygen content; and the shell is provided with an air vent communicating with the air-blowing channel, and a temperature-control fan connected to the drive system is provided in the air-blowing channel. For the air fryer, by providing the heat generating source in the air-blowing channel, and using the heat generating source to burn and generate heat to replace a high-power heating tube of existing air fryers, power consumption of the air fryer is greatly reduced, and it can be realized that the air fryer is powered by a portable power source or an automobile battery so as to complete the cooking outdoors, thus effectively elevating the applicability of the air fryer products. Meanwhile, for the air fryer, by providing in the air-blowing channel the temperature-controlled fan which can be driven forwards and reversely, a flowing direction of airflow in the air-blowing channel can be changed, thus realizing control over a burning rate of the heat generating source, thereby realizing adjustable temperature of the air fryer, and improving the cooking effect of the air fryer.

In an optional embodiment, the drive system includes a drive motor, wherein the drive motor is a variable-speed motor, and the drive motor is in driving connection with the temperature-control fan. By the drive motor, it can be realized that a rotational speed of the temperature-control fan is adjusted, so as to adjust a speed of the ambient air entering the air-blowing channel, and further control the burning rate of the heat generating source, thus realizing the control over the temperature in the cooking cavity.

In an optional embodiment, the air vent includes a first air vent and a second air vent, wherein the first air vent and the second air vent are provided at two ends of the air-blowing channel respectively, and the first air vent is provided adjacent to the heat generating source, and the second air vent is provided adjacent to the temperature-control fan. The first air vent is provided adjacent to the heat generating source, so that the ambient air, after entering the air-blowing channel through the first air vent, can quickly contact the heat generating source and promote the burning of the heat generating source, thus increasing a heating rate of the air fryer during cooking. Meanwhile, the second air vent is provided adjacent to the temperature-control fan, so that the combustion-inhibiting substances produced by the burning of the heat generating source in the air-blowing channel can be quickly discharged, thus increasing the heating rate of the air fryer during cooking.

In an optional embodiment, the air fryer has a heating state and a cooling state, wherein when the drive system is in the reverse drive state, the air fryer is in the heating state, the ambient air is sucked into the air-blowing channel through the first air vent, the combustion-inhibiting substances produced by burning of the heat generating source in the air-blowing channel are discharged through the second air vent; when the drive system is in the forward drive state, the air fryer is in the cooling state, the combustion-inhibiting substances produced by burning of the heat generating source are blown to flow towards the heat generating source. For the air fryer, by switching the heating state and the cooling state, the drive state of the drive system is adjusted, which can effectively adjust the temperature in the cooking cavity, so that the temperature in the cooking cavity is kept at the optimal cooking temperature, and the cooking effect of the air fryer can be effectively improved.

In an optional embodiment, the air fryer has a first temperature control state and a second temperature control state. When the drive system is in the reverse drive state and the rotational speed of the drive motor is increased, the air fryer is in the first temperature control state, the speed of the ambient air being sucked into the air-blowing channel through the air vent and the speed of discharging the combustion-inhibiting substances produced by the burning of the heat generating source in the air-blowing channel are increased. When the drive system is in the reverse drive state and the rotational speed of the drive motor is slowed down, the air fryer is in a slow heating state, the speed of the ambient air being sucked into the air-blowing channel through the air vent and the speed of discharging the combustion-inhibiting substances produced by the burning of the heat generating source are slowed down. For the air fryer, by adjusting the rotational speed of the drive motor so as to cooperate with the drive state of the drive motor, change of the oxygen content in the air-blowing channel can be better adjusted, more precise temperature adjustment is realized, and accuracy of temperature control of the air fryer is ensured, thus improving the cooking effect of the air fryer.

In an optional embodiment, the temperature-control fan is of a structure with spiral fan blades. When cooperating with the drive system, the temperature-control fan of the structure with spiral fan blades has an air sucking state and an air blowing state. Through switching between the air sucking state and the air blowing state, it can be realized that the flowing direction of the airflow in the air-blowing channel is controlled, so that it is realized that the burning rate of the heat generating source is controlled, and further the temperature in the cooking cavity is adjusted.

In an optional embodiment, the heat generating source is detachably provided in the air-blowing channel beside and/or below the cooking cavity, and cooperates with the outer wall of the cooking cavity via thermal transfer. The heat generating source is detachably provided in the air-blowing channel beside and/or below the cooking cavity, so that the heat generating source can better perform thermal transfer and cooperate with the outer wall of the cooking cavity, and can also ensure efficiency of thermal transfer between the heat generating source and the cooking cavity, thus improving the cooking efficiency of the air fryer. In addition, the detachable property of the heat generating source can allow replacement of the heat generating source, and ensure normal progress of the cooking.

In an optional embodiment, a frying pot is detachably provided in the shell, an outer wall of the frying pot at least partially constitutes the outer wall of the cooking cavity and is configured to be in thermal contact and cooperate with the heat generating source, and a food tray is provided to be suspended in the frying pot. The outer wall of the frying pot is configured to be in direct thermal contact and cooperate with the heat generating source, so that the efficiency of thermal transfer between the heat generating source and the frying pot can be further improved, thus improving frying and roasting efficiency. Meanwhile, the frying pot is detachably provided in the shell, so that it can be convenient to take and place cooked or to-be-cooked food, and it can also be easy to replace the heat generating source.

In an optional embodiment, a frying pot is detachably provided in the shell, an outer wall of the frying pot at least partially constitutes the outer wall of the cooking cavity and is configured to be in thermal contact and cooperate with the heat generating source; a frying basket is provided in the frying pot, the frying basket has a food placement cavity communicating with the cooking cavity, a hot air gap is provided between the frying basket and the frying pot, and the frying basket is provided with a hot air port communicating with the food placement cavity and the hot air gap. Through the hot air port and the hot air gap, the hot air heated by the heat generating source in the cooking cavity can heat the frying basket from all directions, and the hot air in the hot air gap can better enter and leave the food placement cavity, thus effectively improving the cooking efficiency and cooking effect of the food in the food placement cavity. Meanwhile, the frying pot is detachably provided in the shell, so that it can be convenient to take and place cooked or to-be-cooked food, and it can also be easy to replace the heat generating source.

In an optional embodiment, the shell is provided thereon with a solar power supply system and a charging jack, wherein the solar power supply system is configured to be electrically connected to the charging jack, the control system and the hot air circulation system. Through the solar power supply system, solar power generation can be realized, and the control system and the hot air circulation system are supplied with power, thus effectively improving the convenience of outdoor use of the air fryer. In addition, the solar power supply system can be charged via the charging jack to store energy, thus further elevating the applicability and outdoor use convenience of the air fryer.

The present application provides a temperature-adjustable outdoor air fryer, so as to solve the technical problems such as slow cooking speed and long waiting time of the existing outdoor air fryers.

In order to solve the above technical problems, the present application provides a temperature-adjustable outdoor air fryer, including a shell, wherein the shell is provided therein with a cooking cavity, a circulation air duct communicating with the cooking cavity is provided outside the cooking cavity, the shell is provided with an air vent communicating with the circulation air duct; a heat generating source configured to be in thermal contact and cooperate with an outer wall of the cooking cavity is provided in the circulation air duct; the shell is provided therein with a control system and a drive system electrically connected to the control system; the circulation air duct or the cooking cavity is provided therein with a fan assembly connected to the drive system, and air heated by the heat generating source in the circulation air duct is adapted to be driven by the fan assembly to the cooking cavity. For the air fryer, by making the circulation air duct communicate with the cooking cavity, the heat generating source can perform thermal transfer through the outer wall of the cooking cavity to heat the air in the cooking cavity, so as to heat the food in the cooking cavity, and also enables the hot airflow heated by the heat generating source in the circulation air duct to enter the cooking cavity to heat the food in the cooking cavity, thus effectively improving the cooking efficiency of the air fryer, and reducing cooking waiting time of the user.

In an optional embodiment, the drive system includes a drive motor, and the drive motor is a variable-speed motor; the shell is provided therein with a temperature sensor extending into the cooking cavity, and the temperature sensor is electrically connected to the control system. The drive motor is configured to cooperate with the fan assembly so as to adjust a speed of the ambient air entering the circulation air duct; the temperature sensor is configured to measure a temperature in the cooking cavity, and feed it back to the control system, and the control system is configured to control and adjust the rotational speed of the drive motor after receiving feedback information. For the air fryer, through the cooperation between the temperature sensor and the control system as well as the drive motor, it can be realized that the temperature in the cooking cavity is automatically adjusted, so that the temperature in the cooking cavity is kept at a pre-set temperature, thus effectively improving the cooking effect of the air fryer.

In an optional embodiment, the heat generating source is a relevant heat generating item susceptible to oxygen content, and the air vent is provided adjacent to the heat generating source. The air vent is provided adjacent to the heat generating source, so that when the ambient air enters the circulation air duct through the air vent, oxygen gas in the air can quickly contact the heat generating source and promote the burning of the heat generating source, thus increasing the heating rate of the air fryer.

In an optional embodiment, the air vent is provided at a bottom of the shell, support legs extending downwards and a detachable bottom plate are provided at the bottom of the shell, and the shell is configured to be suspended above the bottom plate through the support legs. The support legs are configured to suspend the shell, so as to reserve sufficient space at the bottom of the shell for the ambient air to enter the circulation air duct through the air vent, thus ensuring normal progress of the cooking. The bottom plate is configured to provide a steady support plane, so as to ensure normal cooking of the air fryer when being used outdoor and elevate the applicability of the air fryer. Meanwhile, the bottom plate is also configured to play a storing role, for storing burning residues falling down from the air vent when the heat generating source is burning, and preventing the burning residues from polluting the environment.

In an optional embodiment, the heat generating source is coal, charcoal, alcohol, gas stove or wood. The coal, charcoal, alcohol, gas stove or wood, which is chosen as the heat generating source, on one hand, is convenient to carry, and on the other hand, is widely available and cost-effective for use, and thus the practicability of air fryer products can be effectively improved.

In an optional embodiment, the cooking cavity is provided with a communicating port communicating with the circulation air duct, and when the fan assembly is provided in the cooking cavity, at least part of an air suction area of the fan assembly is opposite to the communicating port. By providing the fan assembly in the cooking cavity, and making at least part of the air suction area opposite to the communicating port, it can be realized that the hot airflow in the cooking cavity is driven to flow to heat the food, and the hot airflow in the circulation air duct can also be driven to the cooking cavity to heat the food in the cooking cavity, thus effectively improving the cooking efficiency of the air fryer.

In an optional embodiment, the heat generating source is detachably provided in the circulation air duct beside and/or below the cooking cavity, and cooperates with the outer wall of the cooking cavity through thermal transfer. The heat generating source is detachably provided in the circulation air duct beside and/or below the cooking cavity, so that the heat generating source can better cooperate with the inner wall of the cooking cavity through thermal transfer, and replacement of the heat generating source can also be realized, thus ensuring normal progress of the cooking.

In an optional embodiment, a frying pot is detachably provided in the shell, a handle is provided on a side or top of the frying pot, an outer wall of the frying pot at least partially constitutes the outer wall of the cooking cavity, the heat generating source is provided to be sandwiched between the frying pot and the shell, and a food tray or a food basket is provided in the frying pot. The frying pot is detachably provided in the shell, and the heat generating source is provided to be sandwiched between the shell and the frying pot, so that it is convenient to take and place cooked or to-be-cooked food, and it is also easy to replace the heat generating source, thus effectively improving the use convenience of the air fryer.

In an optional embodiment, the circulation air duct is provided therein with a smoke dust filtering device where an airflow can pass through, wherein a periphery of the smoke dust filtering device fits with an inner wall of the circulation air duct, and heat flow heated by the heat generating source in the circulation air duct is adapted to flow through the smoke dust filtering device and enter the cooking cavity. The smoke dust filtering device is configured to filter smoke dust carried in the heat flow, and prevent the smoke dust carried in the heat flow from contaminating the food in the cooking cavity. Through the smoke dust filtering device, health and sanitation of food cooked by the air fryer can be ensured.

In an optional embodiment, the smoke dust filtering device is detachably provided in the circulation air duct. The smoke dust filtering device is detachably provided in the circulation air duct, so that it is easy to replace in case of damage and is also easy to detach and clean, thus effectively ensuring smoke dust filtering effect of the smoke dust filtering device, and improving the health and sanitation of food cooked by the air fryer.

The present application provides a temperature-adjustable outdoor air fryer, so as to solve the technical problems that the existing air fryers have many use restrictions and poor use experience of the user.

In order to solve the above technical problems, the present application provides a temperature-adjustable outdoor air fryer, including a shell and a cooking cavity provided in the shell, wherein a heating cavity is provided outside the cooking cavity, and the heating cavity is provided therein with a heat generating source configured to be in thermal contact and cooperate with an outer wall of the cooking cavity; the shell is provided therein with a control system and a drive motor and a temperature sensor which are electrically connected to the control system, wherein the drive motor is a variable-speed motor, and the temperature sensor is configured to extend into the cooking cavity; the shell is provided with an air outlet communicating with the cooking cavity and an external space, and a hot air circulation system communicating with the cooking cavity is provided in the shell, wherein the hot air circulation system includes a circulation fan, and the circulation fan is in driving connection with the drive motor. For the air fryer, the combustible heat generating source is used to replace a high-power electric heating tube to heat food, so that the power consumption of the air fryer is greatly reduced, and it can be realized that the air fryer can be powered by a portable power source or an automobile battery so as to complete the cooking outdoors, thus effectively elevating the applicability and use experience of the air fryer products. Meanwhile, for the air fryer, by providing in the shell the drive motor with an adjustable rotational speed and the circulation fan connected to the drive motor, and providing on the shell the air outlet communicating with the cooking cavity and the external space, the heat flow in the cooking cavity can be discharged through the air outlet, to reduce the temperature of the cooking cavity, and it also can be realized that the speed of discharging the heat flow is controlled by using the rotational speed adjustable characteristic of the drive motor, so as to realize the temperature control.

In an optional embodiment, the heat generating source is detachably provided in the heating cavity. The heat generating source is detachably provided in the heating cavity, so that disassembling and replacement of the heat generating source can be realized, and normal progress of the cooking of the air fryer is ensured.

In an optional embodiment, the heat generating source is a relevant heat generating item susceptible to oxygen content. The relevant heat generating item susceptible to oxygen content generates heat by burning, can continuously burn in an oxygen-containing environment to produce a large amount of heat, and can effectively heat the food in the cooking cavity, thus achieving a good cooking effect.

In an optional embodiment, the heat generating source is coal, charcoal, alcohol, gas stove or wood. The coal, charcoal, alcohol, gas stove or wood, which is chosen as the heat generating source, on one hand, is convenient to carry, and on the other hand, is widely available and cost-effective for use, and thus practicability of air fryer products can be effectively improved.

In an optional embodiment, the shell is provided with an air vent, and the air vent is provided adjacent to the heat generating source. The air vent is provided adjacent to the heat generating source, so that when the ambient air enters the heating cavity through the air vent, oxygen gas in the air can quickly contact the heat generating source and promote the burning of the heat generating source, thus realizing rapid heating.

In an optional embodiment, the air vent is provided at a bottom of the shell, support legs extending downwards and a detachable bottom plate are provided at the bottom of the shell, and the shell is configured to be suspended above the bottom plate through the support legs. The air vent is provided at the bottom of the shell, so that the air vent can be hidden, thus elevating overall aesthetics of the air fryer. Meanwhile, the support legs are configured to suspend the shell, so as to reserve sufficient space at the bottom of the shell for airflow to pass therethrough and ensure normal progress of the cooking. Besides, the bottom plate is configured to play a supporting role, and in outdoor use, the bottom plate is configured to provide a steady support plane, so as to ensure normal cooking of the air fryer when being used outdoors, and moreover, the bottom plate further can receive burning residues falling down from the air vent, to avoid affecting the environment and causing fires, and ensure use safety of the air fryer products.

In an optional embodiment, the shell is provided therein with a mounting cavity, wherein the mounting cavity is located above the cooking cavity, and the mounting cavity is provided therein with the control system and the drive motor; and an air duct plate is provided between the mounting cavity and the cooking cavity, wherein a periphery of the air duct plate is configured to extend outwards and then abut against an inner wall of the shell. The air duct plate is configured to isolate heat, and the air duct plate can effectively reduce inflow of the heat flow in the cooking cavity into the mounting cavity to damage the control system, the drive motor, etc. in the mounting cavity.

In an optional embodiment, the mounting cavity is provided therein with a heat dissipation assembly, wherein the heat dissipation assembly is connected to the drive motor. The heat dissipation assembly is configured to dissipate heat of the mounting cavity. Through the heat dissipation assembly, the temperature in the mounting cavity can be effectively reduced, thus avoiding the temperature in the mounting cavity from being too high to affect the control system and the drive motor in the mounting cavity.

In an optional embodiment, a frying pot is detachably provided in the shell, a handle is provided on a side or a top of the frying pot, an outer wall of the frying pot at least partially constitutes the outer wall of the cooking cavity, the heat generating source is provided to be sandwiched between the frying pot and the shell, and a food tray or a food basket is provided in the frying pot. The frying pot is detachably provided in the shell, and the heat generating source is provided to be sandwiched between the shell and the frying pot, so that it is convenient to take and place cooked or to-be-cooked food, and it is also easy to replace the heat generating source, thus improving the use convenience of the air fryer.

In an optional embodiment, the shell is provided thereon with a hand grip. The hand grip is configured to play a holding role, and lifting, moving and like operations on the air fryer can be realized through the hand grip.

Compared with the prior art, the beneficial effects of the present application are as follows.

In the present application, the combustible heat generating source is used to replace a high-power electric heating tube to heat food, so that the power consumption of the air fryer is greatly reduced, and thus the air fryer can be powered by a portable power source or an automobile battery to complete the cooking outdoors, which can effectively elevate the applicability of the air fryer products and reduce use restrictions of the air fryer. Meanwhile, by providing the heat generating source susceptible to oxygen content in the external circulation air duct, and providing in the shell the control system and the drive motor and the temperature sensor which are electrically connected to the control system, the air fryer can automatically adjust the amount and speed of the ambient air entering the external circulation air duct, so as to realize control over the burning rate of the heat generating source, further realize adjustment of the cooking temperature, and effectively improve the cooking effect of the air fryer.

In the present application, by making the circulation air duct communicate with the cooking cavity, the heat generating source can perform thermal transfer through the outer wall of the cooking cavity to heat the air in the cooking cavity, so as to cook the food in the cooking cavity, and moreover, the hot airflow heated by the heat generating source in the circulation air duct can enter the cooking cavity, under the action of the fan assembly, to heat the food in the cooking cavity, so as to effectively improve the cooking efficiency of the air fryer and reduce the cooking waiting time of the user. Meanwhile, by providing in the shell the control system and the variable-speed motor electrically connected to the control system and the temperature sensor extending into the cooking cavity, the temperature in the cooking cavity can be adjusted, so that the temperature in the cooking cavity is kept at the pre-set temperature, and the cooking effect of the air fryer is effectively improved. Besides, by providing the smoke dust filtering device in the circulation air duct, it can be realized that the heat flow entering the cooking cavity is filtered, to prevent the smoke dust carried in the heat flow from contaminating the food, which can effectively ensure the health and sanitation of food cooked by the air fryer.

In order to make the objectives, technical solutions and advantages of the embodiments of the present application clearer, the technical solutions in the embodiments of the present application will be clearly and completely described with reference to the drawings in the embodiments of the present application. Apparently, only some but not all embodiments are described. Generally, components in the embodiments of the present application described and shown in the drawings herein may be arranged and designed in various different configurations.

Accordingly, the following detailed description of the embodiments of the present application provided in the drawings is not intended to limit the scope of protection of the present application, but only represents chosen embodiments of the present application. Based on the embodiments in the present application, all of other embodiments obtained by those ordinarily skilled in the art, without using any inventive efforts, shall fall within the scope of protection of the present application.

### Embodiment 1:

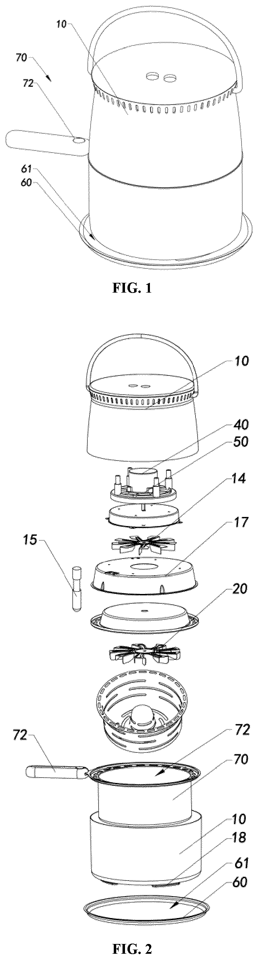

As shown in FIG. 1 to FIG. 3, which are schematic diagrams of a first embodiment of a temperature-adjustable outdoor air fryer provided in the present application, the air fryer includes a shell 10 and a hot air circulation system 20 provided in the shell 10, wherein the shell 10 is provided therein with a cooking cavity 11 for holding food, and the cooking cavity 11 is configured to communicate with the hot air circulation system 20.

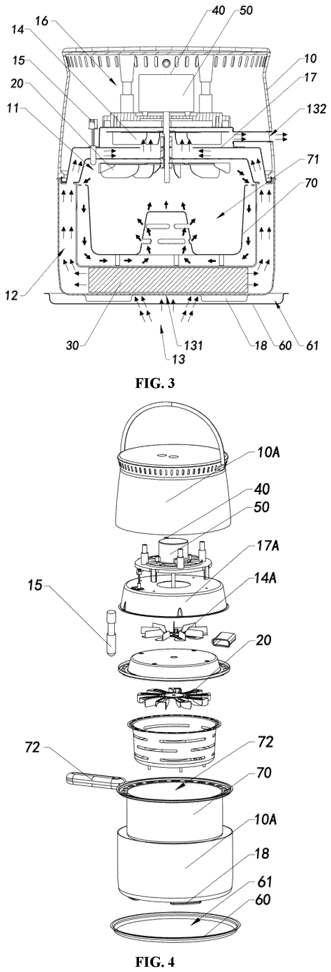

As shown in FIG. 3, an external circulation air duct 12 is provided outside the cooking cavity 11, and the external circulation air duct 12 is preferably provided around the cooking cavity 11. The external circulation air duct 12 is provided therein with a heat generating source 30, wherein the heat generating source 30 is configured to perform thermal transfer and cooperate with an outer wall of the cooking cavity 11, and the heat generating source 30 is a relevant heat generating item susceptible to oxygen content, preferably coal, charcoal, alcohol, gas stove or wood. The heat generating source 30 is suitable for burning and generating heat to heat air in the cooking cavity 11. The hot air circulation system 20 is configured to drive hot air in the cooking cavity 11 to flow, so as to generate a circulating heat flow to heat the food in the cooking cavity 11. The coal, charcoal, alcohol, gas stove or wood, which is chosen as the heat generating source, on one hand, is convenient to carry, and on the other hand, is widely available and cost-effective for use, and thus practicability of air fryer products can be effectively improved.

As shown in FIG. 2 and FIG. 3, the shell 10 is further provided therein with a control system 40 and a drive motor 50, wherein the drive motor 50 is configured to be electrically connected to the control system 40, and the control system 40 is configured to control the drive motor 50 to operate.

As shown in FIG. 3, the shell 10 is provided thereon with an air vent 13, wherein the air vent 13 communicates with the external circulation air duct 12, and ambient air is adapted to flow into the external circulation air duct 12 through the air vent 13 to contact the heat generating source 30, and promote burning of the heat generating source 30.

As shown in FIG. 3, a temperature-control fan 14 is provided in the external circulation air duct 12. The temperature-control fan 14 is connected to the drive motor 50. The temperature-control fan 14 is configured to rotate under driving of the drive motor 50, so as to control flowing of airflow in the external circulation air duct 12. Ambient air is adapted to enter the external circulation air duct 12 through the air vent 13 under the action of the temperature-control fan 14, and contact the heat generating source 30.

In the air fryer, the drive motor 50 is preferably a variable-speed motor, and the drive motor 50 with a rotational speed adjustable characteristic can cooperate with the temperature-control fan 14, to adjust an amount and a speed of the ambient air entering the external circulation air duct 12 through the air vent 13.

As shown in FIG. 2 and FIG. 3, the shell 10 is further provided therein with a temperature sensor 15 electrically connected to the control system 40, wherein the temperature sensor 15 is configured to extend into the cooking cavity 11, and the temperature sensor 15 is configured to measure a temperature in the cooking cavity 11 and feed the same back to the control system 40. The control system 40 is configured to control and adjust the rotational speed of the drive motor 50. Different pre-set temperatures are set for different food in the control system 40. The control system 40 is configured to compare, when receiving the temperature fed back by the temperature sensor 15, the temperature with an optimal cooking temperature. When the temperature fed back by the temperature sensor 15 is higher than the optimal cooking temperature, the control system 40 is configured to control the drive motor 50 to decrease the rotational speed, so as to reduce the amount and speed of the ambient air entering the external circulation air duct 12, thus decreasing a burning rate of the heat generating source 30 and the temperature in the cooking cavity 11. When the temperature fed back by the temperature sensor 15 is lower than the optimal cooking temperature, the control system 40 is configured to control the drive motor 50 to increase the rotational speed, so as to increase the amount and speed of the ambient air entering the external circulation air duct 12, thus increasing the burning rate of the heat generating source 30 and the temperature in the cooking cavity 11. By providing the heat generating source 30 susceptible to oxygen content in the external circulation air channel 12, and providing in the shell 10 the control system 40 and the drive motor 50 and the temperature sensor 15 which are electrically connected to and cooperate with the control system 40, the air fryer can realize automatic adjustment of the temperature in the cooking cavity 11, so that the temperature in the cooking cavity 11 is kept at the optimal cooking temperature, and the cooking effect of the air fryer is effectively improved.

As shown in FIG. 3, the shell 10 is provided therein with a control cavity 16, wherein the control cavity 16 is located outside the external circulation air duct 12, and the control cavity 16 is provided therein with the control system 40 and the drive motor 50. A thermal baffle 17 is provided between the control cavity 16 and the external circulation air duct 12, wherein a periphery of the thermal baffle 17 is configured to extend outwards and then abut against an inner wall of the shell 10, and the thermal baffle 17 is configured to separate the control cavity 16 from the external circulation air duct 12, so as to prevent the heat flow in the external circulation air duct 12 from flowing into the control cavity 16, to damage the control system 40 and the drive motor 50 in the control cavity 16.

As shown in FIG. 3, the air vent 13 includes an air inlet 131 and an air outlet 132. The air inlet 131 and the air outlet 132 are located at two ends of the external circulation air duct 12 respectively. The ambient air is adapted to enter the external circulation air duct 12 from the air inlet 131, under the action of the temperature-control fan 14, to contact the heat generating source 30 and promote the burning of the heat generating source 30. The hot air heated by the heat generating source 30 in the external circulation air duct 12 and combustion-inhibiting substances produced by the burning of the heat generating source 30 are configured to be discharged through the air outlet 132 under the action of the temperature-control fan 14.

As shown in FIG. 3, the air inlet 131 is preferably provided adjacent to the heat generating source 30, and the air outlet 132 is preferably provided adjacent to the temperature-control fan 14. The air inlet 131 is provided adjacent to the heat generating source 30, so that when the ambient air enters the external circulation air duct 12 through the air inlet 131, oxygen gas in the air can quickly contact the heat generating source 30 and promote the burning of the heat generating source 30, thus realizing rapid heating. Meanwhile, the temperature-control fan 14 is provided adjacent to the air outlet 132, so that the heat flow in the external circulation air duct 12 can be quickly discharged, thus achieving rapid cooling.

As shown in FIG. 1 to FIG. 3, the air inlet 131 is preferably provided at a bottom of the shell 10. The air inlet 131 is provided at the bottom of the shell 10, so that the air inlet 131 can be hidden, thus elevating overall aesthetics of the air fryer. Support legs 18 extending downwards are further provided at the bottom of the shell 10. The support legs 18 are preferably integrally molded with the shell 10, and the support legs 18 are configured to suspend the shell 10, so as to reserve sufficient space at the bottom of the shell 10 for circulation of airflow, and ensure that the ambient air can smoothly enter the external circulation air duct 12 through the air inlet 131, thus ensuring normal progress of cooking.

As shown in FIG. 1 to FIG. 3, a bottom plate 60 is further detachably provided at the bottom of the shell 10, and the shell 10 is configured to be suspended above the bottom plate 60 through the support legs 18. The bottom plate 60 is configured to provide a steady support plane for the air fryer when being used outdoors, so as to prevent the air fryer from being unable to cook normally due to a working plane. The bottom plate 60 effectively ensures normal use of the air fryer outdoors, thus elevating applicability of the air fryer.

As shown in FIG. 1 to FIG. 3, the bottom plate 60 has a storage cavity 61 with an open top, wherein the shell 10 is configured to be suspended in the storage cavity 61. When the air fryer is in use, the bottom plate 60 can be used in cooperation with the shell 10 to play a supporting and receiving role, and can also be used alone, wherein the storage cavity 61 is used for storing kitchen wastes and holding articles, etc., thus effectively improving the practicability of the air fryer.

As shown in FIG. 2 and FIG. 3, a frying pot 70 is detachably provided in the shell 10. The frying pot 70 is provided with a food placement cavity 71 with an open top, and the food placement cavity 71 is provided therein with a food tray or a food basket. An outer wall of the frying pot 70 at least partially constitutes the outer wall of the cooking cavity 11. The heat generating source 30 is provided to be sandwiched between the frying pot 70 and the shell 10. The frying pot 70 is detachably provided in the shell 10, and the heat generating source 30 is sandwiched between the shell 10 and the frying pot 70, so that it is convenient to take and place cooked or to-be-cooked food, and it is also easy to replace the heat generating source 30, thus improving use convenience of the air fryer.

As shown in FIG. 1 and FIG. 2, a handle 72 is provided on a side or a top of the frying pot 70. The handle 72 is configured to play a holding role, and the frying pot 70 can be moved or disassembled through the handle 72. The handle 72 effectively reduces operation difficulty of the frying pot 70.

As shown in FIG. 3, the heat generating source 30 is detachably provided in the circulation air duct 12 beside and/or below the cooking cavity 11, and performs thermal transfer and cooperates with the outer wall of the cooking cavity 11. The heat generating source 30 is detachably provided in the circulation air duct 12 beside and/or below the cooking cavity 11, so that the heat generating source 30 can better perform thermal transfer and cooperate with the outer wall of the cooking cavity 11, and replacement of the heat generating source 30 can also be realized, thus ensuring normal progress of the cooking.

### Embodiment 2:

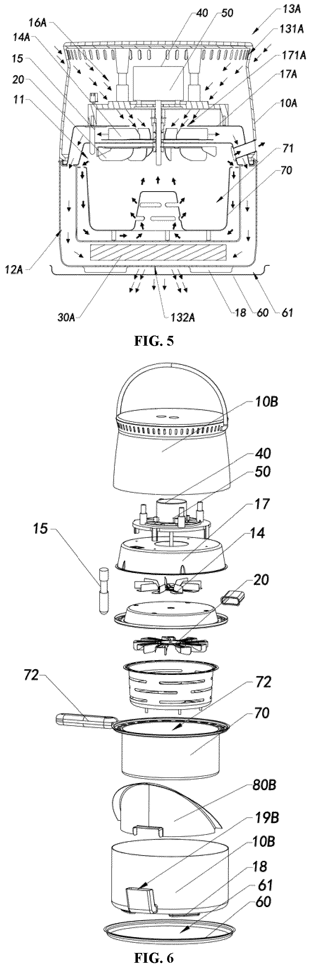

As shown in FIG. 4 and FIG. 5, which are schematic diagrams of a second embodiment of a temperature-adjustable outdoor air fryer provided in the present application, the air fryer in Embodiment 2 is partially consistent with the air fryer in Embodiment 1 in structural characteristics and working principle, which are not described herein again. Embodiment 2 is different from Embodiment 1 in positions of the air inlet and the air outlet and a flowing path of the airflow in the external circulation air duct.

As shown in FIG. 5, in Embodiment 2, the shell 10A is provided therein with a control cavity 16A, wherein the control cavity 16A is located outside the external circulation air duct 12A, and the control cavity 16A is provided therein with the control system 40A and the drive motor 50A. A thermal baffle 17A is provided between the control cavity 16A and the external circulation air duct 12A, wherein a periphery of the thermal baffle 17A is configured to extend outwards and then abut against an inner wall of the shell 10A, and the thermal baffle 17A is provided with a communicating port 171A communicating with the external circulation air duct 12A and the control cavity 16A.

As shown in FIG. 5, the air vent 13A includes an air inlet 131A and an air outlet 132A. The air inlet 131A is provided on a top of the shell 10A and communicates with the control cavity 16A. The air outlet 132A is provided at a bottom of the shell 10A and communicates with the external circulation air duct 12A. When the temperature-control fan 14A is in operation, the ambient air is adapted to be sucked in through the air inlet 131A and flow through the control cavity 16A, and then flow into the external circulation air duct 12A from the communicating port 171A, to contact the heat generating source 30A. Hot air heated by the heat generating source 30A in the external circulation air duct 12A and combustion-inhibiting substances produced by the burning of the heat generating source 30A are configured to be discharged through the air outlet 132A. The air inlet 131A is provided on the top of the shell 10A and communicates with the control cavity 171 A, so that the ambient air, when entering the external circulation air duct 12A through the air inlet 132A, flows through the control cavity 17A to cool the control cavity 17A, which can effectively reduce the temperature of the control cavity 17A. Meanwhile, the periphery of the thermal baffle 17A abuts against the inner wall of the shell 10A, so that the heat flow in the external circulation air duct 12A can be prevented from flowing into the control cavity 17A to cause damage to the control system 40A, the drive motor 50A, etc. in the control cavity 17A.

### Embodiment 3:

As shown in FIG. 6 to FIG. 8, which are schematic diagrams of a third embodiment of a temperature-adjustable outdoor air fryer provided in the present application, the air fryer in Embodiment 3 is partially consistent with the air fryer in Embodiment 2 in structural characteristics and working principle, which are not described herein again. A difference is that the structures of the shells are different.

As shown in FIG. 6 to FIG. 8, an auxiliary air port 19B is provided on a side of the shell 10B, and the shell 10B is provided therein with an air guide cover 80B communicating with the auxiliary air port 19B and the external circulation air duct 12B. The air guide cover 80B is configured to play a role of guiding flow. When the air fryer is in operation, the air heated by the heat generating source 30B in the external circulation air duct 12B and combustion-inhibiting substances produced by the burning of the heat generating source 30B are suitable to be guided by the air guide cover 80B to the auxiliary air port 19B, and discharged from the auxiliary air port 19B. Through the auxiliary air port 19B, a speed of discharging the combustion-inhibiting substances produced by the burning of the heat generating source 30B in the external circulation air duct 12B can be increased, and the burning rate of the heat generating source 30B is increased, thus improving the cooking efficiency, and moreover, a speed of discharging the air heated by the heat generating source 30B in the external circulation air duct 12B can be increased, thus realizing rapid cooling.

### Embodiment 4:

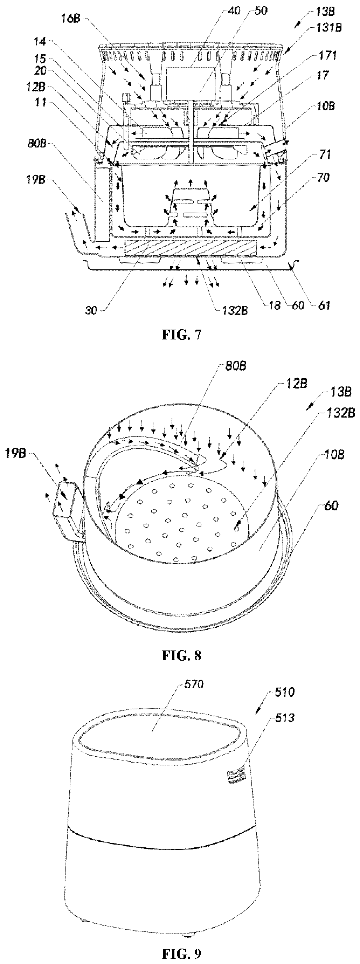

As shown in FIG. 9 to FIG. 11, which are schematic diagrams of a fourth embodiment of a temperature-adjustable outdoor air fryer provided in the present application, the air fryer includes a shell 510 and a hot air circulation system 520 provided in the shell 510, wherein the shell 510 is provided therein with a cooking cavity 511, and the cooking cavity 511 is configured to communicate with the hot air circulation system 520. An air-blowing channel 512 is provided outside the cooking cavity 511, a heat generating source 530 is provided in the air-blowing channel 512, and the heat generating source 530 is in thermal contact and cooperates with an outer wall of the cooking cavity 511. The heat generating source 530 is a relevant heat generating item susceptible to oxygen content, such as coal, charcoal and wood. The heat generating source 530 is suitable for burning and generating heat. The heat generated by the heat generating source 530 is configured to be thermally transferred into the cooking cavity 511 through the outer wall of the cooking cavity 511, so as to heat the air in the cooking cavity 511. The hot air circulation system 520 is configured to drive hot air in the cooking cavity 511 to flow to generate a circulating heat flow for cooking food.

For the air fryer, by providing the heat generating source 530 in the air-blowing channel 512, and using the heat generating source 530 to burn and generate heat to replace a high-power heating tube of existing air fryers, power consumption of the air fryer is greatly reduced, and it can be realized that the air fryer is powered by a portable power source or an automobile battery to complete the cooking, thus effectively elevating the applicability of the air fryer products.

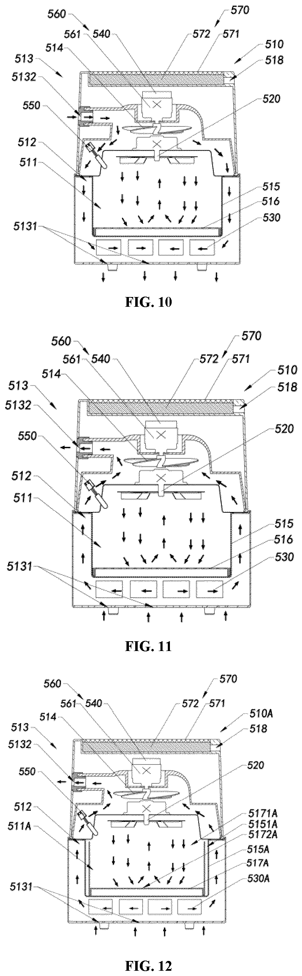

As shown in FIG. 10 and FIG. 11, the shell 510 is provided therein with a control system 540 and a temperature sensor 550. The control system 540 is electrically connected to the hot air circulation system 520 and the temperature sensor 550. The control system 540 is configured to control the hot air circulation system 520 to operate so as to generate a circulating heat flow. The temperature sensor 550 is configured to extend into the cooking cavity 511, to detect a temperature in the cooking cavity 511, and feed a detected temperature back to the control system 540.

As shown in FIG. 10 and FIG. 11, the shell 510 is further provided therein with a drive system 560. The drive system 560 is configured to be electrically connected to the control system 540. The drive system 560 has a forward drive state and a reverse drive state. The control system 540 is configured to adjust the drive state of the drive system 560.

As shown in FIG. 10 and FIG. 11, the shell 510 is provided with an air vent 513, wherein the air vent 513 communicates with the air-blowing channel 512. A temperature-control fan 514 is provided in the air-blowing channel 512, wherein the temperature-control fan 514 is in driving connection with the drive system 560, and the temperature-control fan 514 is configured to rotate under driving of the drive system 560. Ambient air is adapted to enter the air-blowing channel 512 through the air vent 513, under driving of the temperature-control fan 514, to contact the heat generating source 530, and promote burning of the heat generating source 530. For the air fryer, by providing in the air-blowing channel 512 the temperature-controlled fan 514 which can be driven forwards and reversely, a flowing direction of airflow in the air-blowing channel 512 can be changed, thus realizing control over a burning state of the heat generating source 530, thereby realizing adjustable temperature of the air fryer, and improving the cooking effect of the air fryer.

As shown in FIG. 10 and FIG. 11, the air vent 513 includes a first air vent 5131 and a second air vent 5132. The first air vent 5131 and the second air vent 5132 are provided at two ends of the air-blowing channel 512 respectively, wherein the first air vent 5131 is preferably provided adjacent to the heat generating source 530, and the second air vent 5132 is preferably provided adjacent to the temperature-control fan 514. The first air vent 5131 is provided adjacent to the heat generating source 530, so that the ambient air, after entering the air-blowing channel 512 through the first air vent 5131, can quickly contact the heat generating source 530 and promote the burning of the heat generating source 530, thus increasing a heating rate of the air fryer during cooking. Meanwhile, the second air vent 5132 is provided adjacent to the temperature-control fan 514, so that the combustion-inhibiting substances produced by the burning of the heat generating source 530 in the air-blowing channel 512 can be quickly discharged, thus increasing the heating rate of the air fryer during cooking.

As shown in FIG. 10 and FIG. 11, the drive system 560 includes a drive motor 561 and a plurality of electronic components. The drive motor 561 is configured to be in driving connection with the temperature-control fan 514. The temperature-control fan 514 is preferably of a structure with spiral fan blades. When cooperating with the drive system 560, the temperature-control fan 514 of the structure with spiral fan blades has an air sucking state and an air blowing state. Through switching between the air sucking state and the air blowing state, it can be realized that the flowing direction of the airflow in the air-blowing channel 512 is controlled, so that it is realized that the burning rate of the heat generating source 530 is controlled, and the temperature in the cooking cavity 511 is adjusted.

The air fryer has a heating state and a cooling state, wherein when the drive system 560 is in the reverse drive state, the air fryer is in the heating state; and when the drive system 560 is in the forward drive state, the air fryer is in the cooling state.

As shown in FIG. 11, when the drive system 560 is in the forward drive state, the drive motor 561 is configured to drive the temperature-control fan 514 to rotate reversely, so that the temperature-control fan 514 is in the air sucking state and thus generates an upward suction force, and the ambient air is adapted to be sucked into the air-blowing channel 512 through the first air vent 5131 under driving of the temperature-control fan 514, to contact the heat generating source 530. When the ambient air contacts the heat generating source 530, oxygen gas in the air can effectively promote the burning of the heat generating source 530, so that the temperature in the cooking cavity 511 rises. Meanwhile, the drive motor 561 driving the temperature-control fan 514 to rotate reversely will also discharge, through the second air vent 5132, the combustion-inhibiting substances, such as carbon dioxide, carbon monoxide, and sulfur dioxide produced by the burning of the heat generating source 530 in the air-blowing channel 512, so that more ambient air can enter the air-blowing channel 512 through the first air vent 5131 to contact the heat generating source 530, and promote the burning of the heat generating source 530, thus realizing rapid heating.

As shown in FIG. 10, when the drive system 560 is in the forward drive state, the drive motor 561 is configured to drive the temperature-control fan 514 to rotate forwards, so that the temperature-control fan 514 is in the air blowing state and thus blows air downwards, entry of the ambient air into the air-blowing channel 512 through the first air vent 5131 is suppressed, the oxygen content in the air-blowing channel 512 is decreased, the burning of the heat generating source 530 is suppressed, and the temperature in the cooking cavity 511 is reduced. Meanwhile, the drive motor 561 driving the temperature-control fan 514 to rotate forwards will also blow the combustion-inhibiting substances, such as carbon dioxide, carbon monoxide, and sulfur dioxide produced by the burning of the heat generating source 530 in the air-blowing channel 512 to flow towards the heat generating source 530, thus further suppressing the burning of the heat generating source 530 and realizing rapid cooling. For the air fryer, by controlling and adjusting the drive state of the drive system 560, it can be realized that the temperature in the cooking cavity is adjusted, so that the temperature in the cooking cavity 511 is kept at the optimal cooking temperature, thus effectively improving the cooking effect of the air fryer.

The drive motor 561 is preferably a variable-speed motor, and has a function of adjusting a rotational speed. By the drive motor 561, it can be realized that a rotational speed of the temperature-control fan 514 is adjusted, so as to adjust a speed of the ambient air entering the air-blowing channel 512 through the first air vent 5131, and further control the burning rate of the heat generating source 530, thus realizing the control over the temperature in the cooking cavity 511.

In addition, the air fryer further has a first temperature control state and a second temperature control state. When the drive system 560 is in the reverse drive state and the rotational speed of the drive motor 561 is increased, the air fryer is in the first temperature control state, the speed of the ambient air being sucked into the air-blowing channel 512 through the first air vent 5131 and the speed of discharging the combustion-inhibiting substances produced by the burning of the heat generating source 530 in the air-blowing channel 512 are increased, the oxygen content in the air-blowing channel 512 is increased, the burning rate of the heat generating source 530 is increased, and the cooking cavity 511 is heated up. When the drive system 560 is in the reverse drive state and the rotational speed of the drive motor 561 is slowed down, the air fryer is in the second temperature control state, the speed of the ambient air being sucked into the air-blowing channel 512 through the first air vent 5131 and the speed of discharging the combustion-inhibiting substances produced by the burning of the heat generating source 530 are slowed down, the oxygen content in the air-blowing channel 512 is decreased, the burning rate of the heat generating source 530 is decreased, and the cooking cavity 511 is cooled. For the air fryer, by adjusting the rotational speed of the drive motor 561 so as to cooperate with the drive state of the drive motor 561, change of the oxygen content in the air-blowing channel 512 can be better adjusted, more precise temperature adjustment is realized, and accuracy of temperature control of the air fryer is ensured, thus improving the cooking effect of the air fryer.

As shown in FIG. 10 and FIG. 11, the heat generating source 530 is detachably provided in the air-blowing channel 512 beside and/or below the cooking cavity 511, and cooperates with the outer wall of the cooking cavity 511 through thermal transfer. The heat generating source 530 is detachably provided in the air-blowing channel 512 beside and/or below the cooking cavity 511, so that the heat generating source 530 can better perform thermal transfer and cooperate with the outer wall of the cooking cavity 511, and can also ensure efficiency of thermal transfer between the heat generating source 530 and the cooking cavity 511, thus improving the cooking efficiency of the air fryer. In addition, the detachable property of the heat generating source 530 can allow replacement of the heat generating source 530, and ensure normal progress of the cooking.

As shown in FIG. 10 to FIG. 11, a frying pot 515 is detachably provided in the shell 510. An outer wall of the frying pot 515 at least partially constitutes the outer wall of the cooking cavity 511 and is in thermal contact and cooperates with the heat generating source 530. The thermal contact and cooperation between the outer wall of the frying pot 515 and the heat generating source 530 can further improve the efficiency of thermal transfer between the heat generating source 530 and the cooking cavity 511, thus improving frying and roasting efficiency. Meanwhile, the frying pot 515 is detachably provided in the shell 510, so that it can be convenient to take and place cooked or to-be-cooked food, and it can also be easy to replace the heat generating source 530.

As shown in FIG. 10 and FIG. 11, a food tray 516 is detachably provided in the frying pot 515. A support structure is provided at a bottom of the food tray 516 or in the frying pot 515. The food tray 516 is configured to be suspended in the frying pot 515 through the support structure, and the food tray 516 is configured to hold food. The food tray 516 is provided with a plurality of through-holes, wherein the through-holes are configured for allowing a hot airflow to pass therethrough, and in cooking, after air below the food tray 516 is heated by the heat generating source 530, the heated air is adapted to pass through the through-holes to heat bottom of the food. Through the food tray 516, in the cooking of the air fryer, top and bottom of the food can be simultaneously heated, thus avoiding uneven cooking of the food and improving the cooking effect.

As shown in FIG. 10 to FIG. 11, the shell 510 is provided thereon with a solar power supply system 570 and a charging jack 518. The solar power supply system 570 is configured to be electrically connected to the charging jack 518, the control system 540, the hot air circulation system 520 and the drive system 560. The solar power supply system 570 is configured to generate power with solar energy. The solar power supply system 570 includes a solar energy conversion assembly 571 and a battery assembly 572. The solar energy conversion assembly 571 is electrically connected to the battery assembly 572. The solar energy conversion assembly 571 is configured to convert the solar energy into electric energy and store the electric energy in the battery assembly 572, so as to supply power to the control system 540, the hot air circulation system 520 and the drive system 560. Through the solar power supply system 570, solar power generation can be realized, and the control system 540, the hot air circulation system 520 and the drive system 560 are supplied with power, thus effectively improving the convenience of outdoor use of the air fryer. In addition, when the air fryer is not in use, the battery assembly 572 can also be charged via the charging jack 518 to store energy for outdoor use. The solar power supply system 570 can be charged via the charging jack 518 to store energy, thus further elevating the applicability and outdoor use convenience of the air fryer.

### Embodiment 5:

As shown in FIG. 12, which is a schematic diagram of a fifth embodiment of a temperature-adjustable outdoor air fryer provided in the present application, the air fryer in Embodiment 5 is partially consistent with the air fryer in Embodiment 4 in structural characteristics and working principle, which are not described herein again. Embodiment 5 is different from Embodiment 4 in a different structure of the frying pot.

As shown in FIG. 12, a frying basket 517A is provided to be suspended in the frying pot 515A. The frying basket 517A is configured to be detachably provided in the frying pot 515A. The frying basket 517A is provided with a food placement cavity 5171A with an open top. The food placement cavity 5171A is configured to communicate with the cooking cavity 511A, and the food placement cavity 5171A is configured to accommodate food. A hot air gap 5151A is provided between the frying basket 517A and the frying pot 515A, and the hot air gap 5151A communicates with the cooking cavity 511A. The frying basket 517A is provided with a hot air port 5172A communicating with the food placement cavity 5171A and the hot air gap 5151A. The hot air port 5172A is configured to allow hot air to pass therethrough, and hot air heated by the heat generating source 530A in the hot air gap 5151A is adapted to enter and leave the food placement cavity 5171A through the hot air port 5172A, so as to heat the food. Through the hot air port 5172A and the hot air gap 5151A, the hot air heated by the heat generating source 530A in the cooking cavity 511A can heat the frying basket 517A from all directions, and the hot air in the hot air gap 5151A can better enter and leave the food placement cavity 5171A, thus effectively improving the cooking efficiency and cooking effect of the food in the food placement cavity 5171A.

### Embodiment 6:

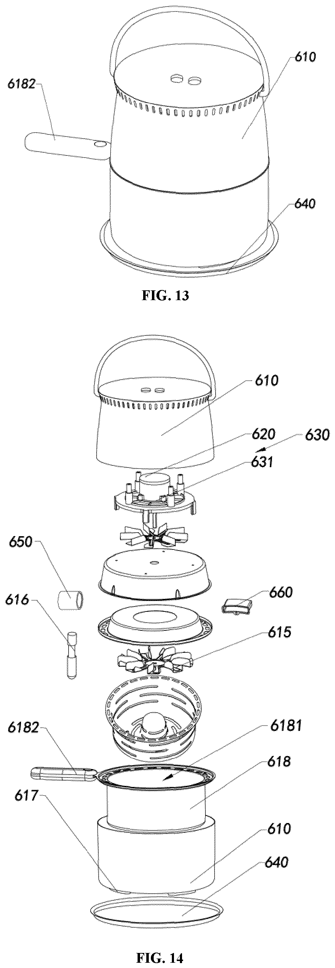

As shown in FIG. 13 to FIG. 15, which are schematic diagrams of a sixth embodiment of a temperature-adjustable outdoor air fryer provided in the present application, the air fryer includes a shell 610, a control system 620 and a drive system 630. The control system 620 and the drive system 630 are provided in the shell 610. The drive system 630 is electrically connected to the control system 620, and the control system 620 is configured to control the drive system 630 to operate.

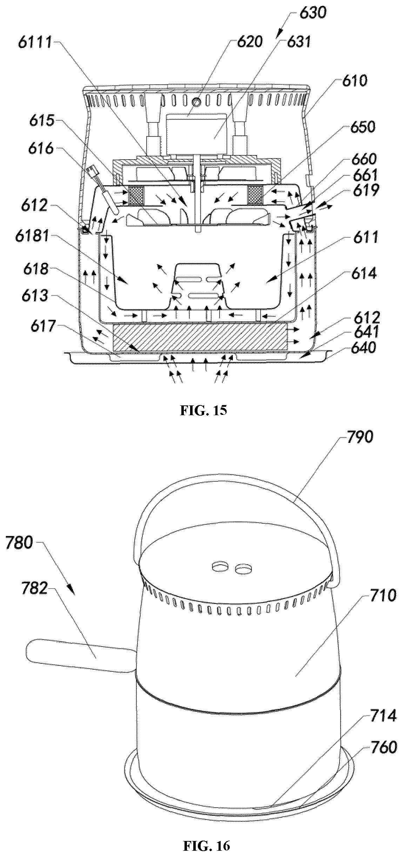

As shown in FIG. 15, the shell 610 is provided therein with a cooking cavity 611. The cooking cavity 611 is configured to cook food. A circulation air duct 612 is provided outside the cooking cavity 611. The circulation air duct 612 is at least partially located between the cooking cavity 611 and the shell 610, and the circulation air duct 612 is configured to communicate with the cooking cavity 611. The shell 610 is provided with an air vent 613, wherein the air vent 613 communicates with the circulation air duct 612, and ambient air is adapted to flow into the circulation air duct 612 through the air vent 613.

As shown in FIG. 15, a heat generating source 614 is provided in the circulation air duct 612, wherein the heat generating source 614 is configured to perform thermal transfer and cooperate with an outer wall of the cooking cavity 611, and the heat generating source 614 is preferably a relevant heat generating item susceptible to oxygen content, such as coal, charcoal, alcohol, gas stove or wood. The heat generating source 614 is suitable for burning and generating heat. The heat generated by the heat generating source 614 is configured to be thermally transferred into the cooking cavity 611 through the outer wall of the cooking cavity 611, so as to heat the air in the cooking cavity 611 and thus to heat food.

The coal, charcoal, alcohol, gas stove or wood, which is chosen as the heat generating source of the air fryer, on one hand, is convenient to carry, and on the other hand, is widely available and cost-effective for use, and thus practicability of air fryer products can be effectively improved.

As shown in FIG. 15, the air vent 613 is preferably provided adjacent to the heat generating source 614. The air vent 613 is provided adjacent to the heat generating source 614, so that when the ambient air enters the circulation air duct 612 through the air vent 613, oxygen gas in the air can quickly contact the heat generating source 614 and promote the burning of the heat generating source 614, thus increasing a heating rate of the air fryer.

As shown in FIG. 15, the cooking cavity 611 is provided therein with a fan assembly 615. The fan assembly 615 is in driving connection to the drive system 630. The fan assembly 615 is configured to rotate under driving of the drive system 630, so as to produce a driving force to drive the airflow to flow. The heat flow heated by the heat generating source 614 in the circulation air duct 612 is adapted to flow into the cooking cavity under the action of the fan assembly 615, to cook the food in the cooking cavity 611. For the air fryer, by making the circulation air duct 612 communicate with the cooking cavity 611, the heat generating source 614 can perform thermal transfer through the outer wall of the cooking cavity 611 to heat the air in the cooking cavity 611, so as to heat the food in the cooking cavity 611, and also enables the hot airflow heated by the heat generating source 614 in the circulation air duct 612 to enter the cooking cavity 611 to heat the food in the cooking cavity 611, thus effectively improving the cooking efficiency of the air fryer, and reducing cooking waiting time of the user.

As shown in FIG. 14 and FIG. 15, the drive system 630 includes a drive motor 631 and a plurality of electrical devices. The drive motor 631 is configured to be in driving connection with the fan assembly 615, and the drive motor 631 is preferably a variable-speed motor, and the fan assembly 615 is preferably of a structure with spiral fan blades. The drive motor 631 is configured to cooperate with the fan assembly 615 so as to drive the air to flow. When the drive motor 631 and the fan assembly 615 are in operation, the ambient air is adapted to be sucked into the circulation air duct 612 from the air vent 613, under the action of the fan assembly 615, to contact the heat generating source 614, and promote burning of the heat generating source 614. Meanwhile, the hot air heated by the heat generating source 614 is adapted to flow towards the cooking cavity 611 under driving of the fan assembly 615, so as to heat the food in the cooking cavity 611. The rotational speed adjustable characteristic of the drive motor 631 enables that during operation of the drive motor 631, a speed and an entry amount of the ambient air entering the circulation air duct 612 through the air vent 613 can be controlled by adjusting the rotational speed, so as to control the burning rate of the heat generating source 614 and achieve the purpose of temperature control.

As shown in FIG. 14 and FIG. 15, the shell 610 is provided therein with a temperature sensor 616. The temperature sensor 616 is configured to extend into the cooking cavity 611, and to be electrically connected to the control system 620. The temperature sensor 616 is configured to measure a temperature in the cooking cavity 611, and feed a measured temperature back to the control system 620. The control system 620 is configured to control and adjust the rotational speed of the drive motor 631 after receiving feedback information from the temperature sensor 616, so as to adjust the temperature in the cooking cavity 611.

Different pre-set temperatures are set for different food in the control system 620. When the air fryer is used for cooking food, the control system 620 is configured to compare, when receiving the temperature fed back by the temperature sensor 616, the temperature fed back with the pre-set temperature. When the temperature fed back by the temperature sensor 616 is higher than the pre-set temperature, the control system 620 is configured to control the drive motor 631 to decrease the rotational speed, so as to decrease a burning rate of the heat generating source 614 and thus reduce the temperature in the cooking cavity 611. When the temperature fed back by the temperature sensor 616 is lower than the pre-set temperature, the control system 620 is configured to control the drive motor 631 to increase the rotational speed, so as to increase the burning rate of the heat generating source 614 and thus increase the temperature in the cooking cavity 611. For the air fryer, through the cooperation between the temperature sensor 616 and the control system 630 as well as the drive motor 630, it can be realized that the temperature in the cooking cavity 611 is automatically adjusted, so that the temperature in the cooking cavity 611 is kept at the pre-set temperature, thus effectively improving the cooking effect of the air fryer.

As shown in FIG. 15, the air vent 613 is preferably provided at the bottom of the shell 610, and support legs 617 extending downwards are further provided at the bottom of the shell 610. The support legs 617 are configured to suspend the shell 610, so as to reserve sufficient space at the bottom of the shell 610 for the ambient air to enter the circulation air duct 612 through the air inlet 613, thus ensuring normal progress of the cooking.

As shown in FIG. 13 to FIG. 15, a bottom plate 640 is further detachably provided at the bottom of the shell 610. The shell 610 is configured to be suspended above the bottom plate 640 through the support legs 617. The bottom plate 640 is configured to provide a stable and clean support plane for the shell 610, so as to ensure normal progress of the cooking. When the air fryer is used outdoors, the air fryer may not be placed stably due to topography, and normal cooking cannot be carried out. Moreover, when the air fryer is used outdoors, the air vent 613 at the bottom of the shell 610 is easy to be blocked due to ground factor(s). Therefore, providing a stable and clean support plane at the bottom of the shell 610 can effectively prevent the air vent 613 from being blocked, and elevate the applicability of the air fryer.

As shown in FIG. 13 to FIG. 15, the bottom plate 640 is further provided with a storage cavity 641, the shell 610 is configured to be suspended in the storage cavity 641 through the support legs 617, and the storage cavity 641 is configured to completely cover the bottom of the shell 610. The storage cavity 641 in the air fryer is configured to play a storing role. When the air fryer is in operation and the heat generating source 614 in the circulation air duct 612 burns and produces wastes, as the air vent 613 is provided adjacent to the heat generating source 614, the wastes produced by the burning of the heat generating source 614 may fall onto the ground through the air vent 613 under the action of gravity, and cause environmental pollution; therefore, the storage cavity 641 is configured to store the wastes produced by the burning of the heat generating source 614. In addition, the bottom plate 640 may further be detached and then separately used as a storage tray to store garbage produced outdoors, thus avoiding environmental pollution.

As shown in FIG. 15, the cooking cavity 611 is provided with a communicating port 6111 communicating with the circulation air duct 612, and when the fan assembly 615 is provided in the cooking cavity 611, at least part of an air suction area of the fan assembly 615 is opposite to the communicating port 6111. For the air fryer, by providing the fan assembly 615 in the cooking cavity 611, and making at least part of the air suction area opposite to the communicating port 6111, it can be realized that the hot airflow in the cooking cavity 611 is driven to flow to heat the food, and the hot airflow in the circulation air duct 612 can also be driven to the cooking cavity 611 to heat the food in the cooking cavity 611, thus effectively improving the cooking efficiency of the air fryer.

As shown in FIG. 15, the heat generating source 614 is preferably detachably provided in the circulation air duct 612 beside and/or below the cooking cavity 611, and performs thermal transfer and cooperates with the outer wall of the cooking cavity 611. The heat generating source 614 is detachably provided in the circulation air duct beside and/or below the cooking cavity 611, so that the heat generating source 614 can better perform thermal transfer and cooperates with the inner wall of the cooking cavity 611, and replacement of the heat generating source 614 can also be realized, thus ensuring normal progress of the cooking.

As shown in FIG. 14 and FIG. 15, a frying pot 618 is detachably provided in the shell 610. The frying pot 618 is provided therein with an accommodating cavity 6181 with an open top, the accommodating cavity 6181 communicates with the cooking cavity 611, and the accommodating cavity 6181 is configured to accommodate food. A handle 6182 is provided on a side or top of the frying pot 618, and the user can suitably move and disassemble the frying pot 618 by holding the handle 6182. An outer wall of the frying pot 618 at least partially constitutes the outer wall of the cooking cavity 611. The heat generating source 614 is provided to be sandwiched between the frying pot 618 and the shell 610. A food tray or a food basket is provided in the frying pot 618. The frying pot 618 is detachably provided in the shell 610, and the heat generating source 614 is provided to be sandwiched between the shell 610 and the frying pot 618, so that it is convenient to take and place cooked or to-be-cooked food, and it is also easy to replace the heat generating source 614, thus effectively improving the use convenience of the air fryer.

As shown in FIG. 15, the shell 610 is further provided therein with a smoke dust filtering device 650 where an airflow can pass through. The smoke dust filtering device 650 is detachably provided in the circulation air duct 612. A periphery of the smoke dust filtering device 650 is configured to fit with an inner wall of the circulation air duct 612. The smoke dust filtering device 650 is configured to play a filtering role. The heat flow heated by the heat generating source 614 in the circulation air duct 612 is adapted to flow through the smoke dust filtering device 650 and then enter the cooking cavity 611. The smoke dust filtering device 650 is configured to filter smoke dust carried in the heat flow and prevent the smoke dust carried in the heat flow from contaminating the food in the cooking cavity 611. Through the smoke dust filtering device 650, health and sanitation of food cooked by the air fryer can be ensured. In addition, the smoke dust filtering device 650 is detachably provided in the circulation air duct 612, so that it is easy to replace in case of damage and is also easy to detach and clean, thus effectively ensuring smoke dust filtering effect of the smoke dust filtering device 650, and improving the health and sanitation of food cooked by the air fryer.

As shown in FIG. 15, the shell 610 is further provided therein with an air outlet assembly 660, wherein the air outlet assembly 660 is provided with an air outlet channel 661 for allowing circulation of airflow. The shell 610 is provided with an air outlet 619. The air outlet assembly 660 has one end communicating with the cooking cavity 611, and the other end extending through the circulation air duct 612 and then communicating with the air outlet 619. The circulating heat flow in the cooking cavity 611 is adapted to be discharged through the air outlet assembly 660. Through the air outlet assembly 660, the circulating heat flow in the cooking cavity 611 can be directly discharged out of the shell 610, thus effectively preventing convection of the heat flow in the cooking cavity 611 with the heat flow in the circulation air duct 612 to cause the heat flow in the circulation air duct 612 to fail to enter the cooking cavity 611 which affects normal progress of the cooking.

### Embodiment 7:

The air fryer in Embodiment 7 is partially consistent with the air fryer in Embodiment 6 in structural characteristics and working principle, which are not described herein again. A difference lies in a different position for providing the fan assembly.

The fan assembly 615 in Embodiment 7 is provided in the circulation air duct 612. By providing the fan assembly 615 in the circulation air duct 612, a distance between the fan assembly 615 and the air vent 613 can be reduced, thus reducing loss of driving force caused by the distance, further improving driving effect of the fan assembly 615, and increasing the amount and speed of the ambient air entering the circulation air duct 612.

### Embodiment 8:

As shown in FIG. 16 to FIG. 18, which are schematic diagrams of an eighth embodiment of a temperature-adjustable outdoor air fryer provided in the present application, the air fryer includes a shell 710 and a hot air circulation system 720 provided in the shell 710, wherein the shell 710 is provided therein with a cooking cavity 711 for holding food, and the cooking cavity 711 is configured to communicate with the hot air circulation system 720.

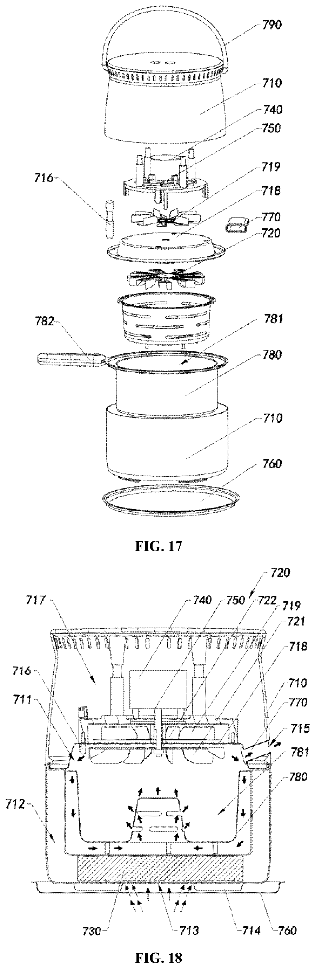

As shown in FIG. 18, a heating cavity 712 is provided outside the cooking cavity 711, and the heating cavity 712 is provided therein with a heat generating source 730. The heat generating source 730 is configured to cooperate with an outer wall of the cooking cavity 711 through thermal transfer, and the heat generating source 730 is preferably a relevant heat generating item susceptible to oxygen content, such as coal, charcoal, alcohol, gas stove or wood. The heat generating source 730 is suitable for burning and generating heat to heat air in the cooking cavity 711. The hot air circulation system 720 is configured to drive hot air in the cooking cavity 711 to flow, so as to generate a circulating heat flow to heat the food in the cooking cavity 711. The coal, charcoal, alcohol, gas stove or wood or the like, which is chosen as the heat generating source 730, on one hand, is convenient to carry, and on the other hand, is widely available and cost-effective for use, and thus the practicability of air fryer products can be effectively improved. In addition, the relevant heat generating item susceptible to oxygen content generates heat by burning, can continuously burn in an oxygen-containing environment to produce a large amount of heat, and can effectively heat the food in the cooking cavity 711, thus achieving a good cooking effect.

As shown in FIG. 17 and FIG. 18, the shell 710 is further provided therein with a control system 740 and a drive motor 750, wherein the drive motor 750 is a variable-speed motor, the drive motor 750 is configured to be electrically connected to the control system 740, and the control system 740 is configured to control the drive motor 750 to operate. The hot air circulation system 720 includes a circulation fan 721 and a fixing assembly 722, wherein the fixing assembly 722 is configured to play a fixing role, and the circulation fan 721 is configured to be fixedly connected to the drive motor 750 through the fixing assembly 722. The drive motor 750 is configured to drive the circulation fan 721 to rotate.

As shown in FIG. 18, the shell 711 is provided with an air vent 713, wherein the air vent 713 is provided adjacent to the heat generating source 730, the air vent 713 is configured to communicate with the heating cavity 712, and the ambient air is adapted to flow into the heating cavity 712 through the air vent 713 to contact the heat generating source 730, and promote burning of the heat generating source 730. In the air fryer, the air vent 713 is provided adjacent to the heat generating source 730, so that when the ambient air enters the heating cavity 712 through the air vent 713, oxygen gas in the air can quickly contact the heat generating source 730 and promote the burning of the heat generating source 730, thus realizing rapid heating.

As shown in FIG. 18, the air vent 713 is preferably provided at a bottom of the shell 710. The air vent 713 is provided at the bottom of the shell 710, so that the air vent 713 can be hidden, thus elevating overall aesthetics of the air fryer. Support legs 714 extending downwards are further provided at the bottom of the shell 710. The support legs 714 are preferably integrally molded with the shell 710, and the support legs 714 are configured to suspend the shell 710, so as to reserve sufficient space at the bottom of the shell 710 for circulation of airflow, and ensure that the ambient air can smoothly enter the heating cavity 712 through the air vent 713, thus ensuring normal progress of the cooking.

As shown in FIG. 16 to FIG. 18, a bottom plate 760 is further detachably provided at the bottom of the shell 710. The shell 710 is configured to be suspended above the bottom plate 760 through the support legs 714. The bottom plate 760 is configured to play a supporting role. The bottom plate 760 is configured to provide a steady support plane for the air fryer when being used outdoors, so as to avoid the air fryer from being unable to cook normally due to a working plane. Through the bottom plate 760, the normal progress of the air fryer in outdoor use can be effectively ensured, and the applicability of the air fryer is elevated. In addition, the bottom plate 760 is also configured to play a receiving role, wherein when burning residues produced by the burning of the heat generating source 730 fall down from the air vent 713, they can be received by the bottom plate 760, which can effectively avoid affecting the environment and causing fires.

As shown in FIG. 18, the shell 710 is provided with an air outlet 715, and an air outlet assembly 770 having an air outlet channel is provided in the shell 710, wherein the air outlet assembly 770 has one end communicating with the cooking cavity 711, and the other end communicating with the air outlet 715. The air outlet assembly 770 is configured to play a role of guiding flow, and a circulating heat flow in the cooking cavity 711 is adapted to be guided to the air outlet 715 through the air outlet assembly 770, so as to be discharged.

For the air fryer, by providing in the shell 711 the drive motor 750 with an adjustable rotational speed and the circulation fan 721 connected to the drive motor 750, and providing on the shell 710 the air outlet 715 communicating with the cooking cavity 711 and the external space, the heat flow in the cooking cavity 711 can be discharged through the air outlet 715, to reduce the temperature of the cooking cavity 711, and it also can be realized that the speed of discharging the heat flow is controlled by using the rotational speed adjustable characteristic of the drive motor 750, so as to realize the temperature control.

As shown in FIG. 17 and FIG. 18, the shell 710 is further provided therein with a temperature sensor 716 electrically connected to the control system 740. The temperature sensor 716 is configured to extend into the cooking cavity 711, and the temperature sensor 716 is configured to measure a temperature in the cooking cavity 711 and feed a measured temperature back to the control system 740. The control system 740 is configured to control and adjust, after receiving temperature data fed back by the temperature sensor 716, the rotational speed of the drive motor 750 according to the temperature data, so as to adjust the temperature in the cooking cavity 711.

Different pre-set temperatures are set for different food in the control system 740. The control system 740 is configured to compare, when receiving the temperature fed back by the temperature sensor 716, the temperature fed back with the pre-set temperature. When the temperature fed back by the temperature sensor 716 is higher than the pre-set temperature, the control system 740 is configured to control the drive motor 750 to increase the rotational speed, so as to quickly discharge the heat flow in the cooking cavity 711 through the air outlet 715 and reduce the temperature in the cooking cavity 711. When the temperature fed back by the temperature sensor 716 is lower than the pre-set temperature, the control system 740 is configured to control the drive motor 750 to decrease the rotational speed, so as to reduce a discharging speed and a discharging amount of the heat flow in the cooking cavity 711 and increase the temperature in the cooking cavity 711. By providing in the shell 710 the control system 740 and the drive motor 750 and the temperature sensor 716 which are electrically connected to and cooperate with the control system 740, the air fryer can realize automatic adjustment of the temperature in the cooking cavity 711, so that the temperature in the cooking cavity 711 is kept at the pre-set temperature, and the cooking effect of the air fryer is effectively improved.

As shown in FIG. 18, the shell 710 is provided therein with a mounting cavity 717, wherein the mounting cavity 717 is located above the cooking cavity 711, and the mounting cavity 717 is provided therein with the control system 740, the drive motor 750, etc. An air duct plate 718 is provided between the mounting cavity 717 and the cooking cavity 711, wherein a periphery of the air duct plate 718 is configured to extend outwards and then abut against an inner wall of the shell 710, and the air duct plate 718 is configured to separate the mounting cavity 717 from the cooking cavity 711, so as to effectively reduce inflow of the heat flow in the cooking cavity 711 into the mounting cavity 717 to damage the control system 740, the drive motor 750, etc. in the mounting cavity 717.

As shown in FIG. 17 and FIG. 18, the mounting cavity 717 is provided therein with a heat dissipation assembly 719, wherein the heat dissipation assembly 719 is connected to the drive motor 750, and the heat dissipation assembly 719 is configured to rotate under driving of the drive motor 750. The heat dissipation assembly 719 is configured to dissipate heat of the mounting cavity 717. Through the heat dissipation assembly 719, the temperature in the mounting cavity 717 can be effectively reduced, thus avoiding the temperature in the mounting cavity 717 from being too high to affect the control system 740 and the drive motor 750 in the mounting cavity 717.

As shown in FIG. 17 and FIG. 18, a frying pot 780 is detachably provided in the shell 710. The frying pot 780 is provided with a food placement cavity 781 with an open top, and the food placement cavity 781 is provided therein with a food tray or a food basket. An outer wall of the frying pot 780 at least partially constitutes an outer wall of the cooking cavity 711. The heat generating source 730 is provided to be sandwiched between the frying pot 780 and the shell 710. The frying pot 780 is detachably provided in the shell 710, and the heat generating source 730 is provided to be sandwiched between the shell 710 and the frying pot 780, so that it is convenient to take and place cooked or to-be-cooked food, and it is also easy to replace the heat generating source 730, thus improving the use convenience of the air fryer.

As shown in FIG. 18, the heat generating source 730 is configured to be detachably provided in the heating cavity 712 and performs thermal transfer and cooperates with the outer wall of the cooking cavity 711. The heat generating source 730 is detachably provided in the heating cavity 712, so that the heat generating source 730 can be replaced and normal progress of the cooking can be ensured.

As shown in FIG. 16 and FIG. 17, a handle 782 is provided on a side or a top of the frying pot 780, wherein the handle 782 is configured to play a holding role, and the frying pot 780 can be moved and/or disassembled through the handle 782. The shell 710 is provided thereon with a hand grip 790, wherein the hand grip 790 is configured to play a holding role, and lifting, moving and like operations on the air fryer can be realized through the hand grip 790.

In any of the above embodiments, the adjustment of the temperature inside the cooking cavity may be realized by controlling ON/OFF of the drive motor. The principle thereof is that: when the drive motor is turned on, the drive motor may drive the temperature-control fan to rotate, where at this time, the air flowing through the heat generating source increases, the combustion of the heat generating source accelerates, increasing the calorific value, and the temperature in the cooking cavity increases accordingly; conversely, when the drive motor is turned off, the temperature-control fan stops rotating, where at this time, the air flowing through the heat generating source decreases, the combustion of the heat generating source is slowed down, decreasing the calorific value, and the temperature in the cooking cavity decreases accordingly.

It should be noted that the terms used herein are merely for the purpose of describing the embodiments and are not intended to limit exemplary embodiments according to the present application. As used herein, the singular form is intended to include the plural form as well, unless clearly indicated otherwise in the context. Besides, it should also be understood that the terms "contain" and/or "include", when used in the description, specify the presence of features, steps, operations, devices, components and/or combinations thereof.

Unless otherwise specified, relative arrangement of components and steps, numerical expressions and numerical values illustrated in these embodiments do not limit the scope of the present application. Meanwhile, it should be understood that, for the convenience of description, dimensions of various parts shown in the drawings are not drawn according to actual proportional relationships. Techniques, methods and devices known to those of ordinary skill in the relevant art may not be discussed in detail, but the techniques, methods and devices should be considered as part of granted specification, where appropriate. In all examples shown and discussed herein, any specific values should be construed as exemplary only and not as limiting. Therefore, other examples of exemplary embodiments may have different values. It should be noted that similar reference signs and letters represent similar items in the following drawings; therefore, once a certain item is defined in one drawing, it is unnecessary to further discuss the same in subsequent drawings.

In the description of the present application, it is to be noted that orientation or positional relationships indicated by orientation terms such as "front, back, up, down, left, right", "transverse, longitudinal, vertical, horizontal" and "top, bottom" are the orientation or positional relationships shown based on the drawings, only for facilitating the description of the present application and simplifying the description, and in cases where there is no opposite description, these orientation terms do not indicate or suggest that the related devices or elements must have a specific orientation or be constructed and operated in a particular orientation, and thus they should not be construed as limiting the scope of protection of the present application; the orientation terms "inside, outside" refer to the inside and outside relative to outline of each component itself.

For ease of description, spatial relative terms, such as "over", "above", "on an upper surface of...", and "on top", may be used herein to describe spatial positional relationships between one device or feature and other devices or features as illustrated in the drawings. It should be understood that the spatial relative terms are intended to encompass different orientations in use or operation in addition to the orientation of the device depicted in the drawings. For example, if a device in the drawing is inverted, the device described as "above other devices or structures" or "over other devices or structures" would then be located "below other devices or structures" or "under other devices or structures". Accordingly, the exemplary term "above" can encompass two orientations of "above" and "below". The device can be positioned in other different ways as well (rotated by 90 degrees or in other orientations), and the spatial relative description used herein is to be interpreted accordingly.

In addition, it should be noted that, the terms such as "first" and "second" are used to define parts only for the convenience of distinguishing corresponding parts, and unless otherwise stated, the above words have no special meanings, and thus cannot be construed as limiting the scope of protection of the present application.

The temperature-adjustable outdoor air fryer provided in the present application are introduced in detail in the above. Specific examples are used herein to illustrate the principle and implementations of the present application. The description of the above embodiments is only used to help understand the method of the present application and the core idea thereof; meanwhile, those of ordinary skill in the art could make changes to the embodiments and the application scope according to the idea of the present application. To sum up, the contents of the present specification should not be construed as limitation to the present application.

### INDUSTRIAL APPLICABILITY

In the present application, the combustible heat generating source is used to replace a high-power electric heating tube to heat food, so that the power consumption of the air fryer is greatly reduced, and thus the user, when using the air fryer outdoors, can power the air fryer by a portable power source or an automobile battery to complete the cooking, thus effectively elevating the applicability of the air fryer products and reducing use restrictions of the air fryer. Meanwhile, by providing the heat generating source susceptible to oxygen content in the external circulation air duct of the air fryer, providing in the shell the control system and the drive motor electrically connected to the control system, and providing in the external circulation air duct the temperature-control fan in driving connection with the variable-speed motor and the temperature sensor electrically connected to the control system and extending into the cooking cavity, the air fryer can automatically adjust the amount and speed of the ambient air entering the external circulation air duct, so as to realize that the burning rate of the heat generating source is controlled, further realizing adjustment of the temperature in the cooking cavity and effectively improving the cooking effect of the air fryer.

By making the circulation air duct communicate with the cooking cavity, the heat generating source can perform thermal transfer through the outer wall of the cooking cavity to heat the air in the cooking cavity, so as to cook the food in the cooking cavity, and moreover, the hot airflow heated by the heat generating source in the circulation air duct can enter the cooking cavity, under the action of the fan assembly, to heat the food in the cooking cavity, so as to improve the cooking efficiency of the air fryer and reduce the cooking waiting time of the user. Meanwhile, by providing the smoke dust filtering device in the circulation air duct, it can be realized that the heat flow entering the cooking cavity is filtered, to prevent the smoke dust carried in the heat flow from contaminating the food, which can effectively ensure the health and sanitation of food cooked by the air fryer.

## Claims

1. A temperature-adjustable outdoor air fryer, comprising a shell (10, 10A, 10B, 510, 610, 710), wherein the shell (10, 10A, 10B, 510, 610, 710) is provided therein with a cooking cavity (11, 511, 611, 711); an external circulation air duct (12, 12A, 12B, 512, 712) is provided outside the cooking cavity (11, 511, 611, 711), the external circulation air duct (12, 12A, 12B, 512, 712) is provided therein with a heat generating source (30, 30A, 30B, 530, 614, 730) configured to be in thermal contact and cooperate with an outer wall of the cooking cavity (11, 511, 611, 711), and the heat generating source (30, 30A, 30B, 530, 614, 730) is a relevant heat generating item susceptible to oxygen content; the shell (10, 10A, 10B, 510, 610, 710) is provided therein with a control system (40, 40A, 540, 620, 740), and a drive motor (50, 50A, 560, 631, 750) and a temperature sensor (15, 550, 616, 716) which are electrically connected to the control system (40, 40A, 540, 620, 740), wherein the temperature sensor (15, 550, 616, 716) is configured to extend into the cooking cavity (11, 511, 611, 711); and a temperature-control fan (14, 14A, 514, 615, 721) connected to the drive motor (50, 50A, 560, 631, 750) is provided in the external circulation air duct (12, 12A, 12B, 512, 712).

2. The temperature-adjustable outdoor air fryer according to claim 1, wherein a hot air circulation system (20) communicating with the cooking cavity (11) is provided in the shell (10, 10A, 10B), the drive motor (50, 50A) is a variable-speed motor, and the shell (10, 10A, 10B) is provided with an air vent (13, 13A) communicating with the external circulation air duct (12, 12A, 12B).

3. The temperature-adjustable outdoor air fryer according to claim 2, wherein the air vent (13, 13A) comprises an air inlet (131, 131A) and an air outlet (132, 132A), the air inlet (131, 131A) and the air outlet (132, 132A) are located at two ends of the external circulation air duct (12, 12A, 12B), the air inlet (131, 131A) is provided adjacent to the heat generating source (30, 30A, 30B), and the air outlet (132, 132A) is provided adjacent to the temperature-control fan (14, 14A),
preferably, the air inlet (131, 131A) is provided at a bottom of the shell (10, 10A, 10B), support legs (18) extending downwards and a detachable bottom plate (60) are provided at the bottom of the shell (10, 10A, 10B), and the shell (10, 10A, 10B) is configured to be suspended above the bottom plate (60) through the support legs (18).

4. The temperature-adjustable outdoor air fryer according to claim 2, wherein the shell (10, 10A, 10B) is provided therein with a control cavity (16, 16A), the control cavity (16, 16A) is located outside the external circulation air duct (12, 12A, 12B), and the control cavity (16, 16A) is provided therein with the control system (40, 40A) and the drive motor (50, 50A); a thermal baffle (17, 17A) is provided between the control cavity (16, 16A) and the external circulation air duct (12, 12A, 12B), a periphery of the thermal baffle (17, 17A) is configured to extend outwards and then abut against an inner wall of the shell (10, 10A, 10B); the air vent (13, 13A) comprises an air inlet (131, 131A) and an air outlet (132, 132A), the air inlet (131, 131A) is provided on a top of the shell (10, 10A, 10B) and communicates with the control cavity (16, 16A) the air outlet (132, 132A) is provided at a bottom of the shell (10, 10A, 10B) and communicates with the external circulation air duct (12, 12A, 12B); and the thermal baffle (17, 17A) is provided with a communicating port (171A) communicating with the control cavity (16, 16A) and the external circulation air duct (12, 12A, 12B),
preferably, an auxiliary airport (19B) is provided on a side of the shell (10, 10A, 10B), and the shell (10, 10A, 10B) is provided therein with an air guide cover (80B) communicating with the auxiliary air port (19B) and the external circulation air duct (12, 12A, 12B), wherein combustion-inhibiting substances produced by burning of the heat generating source (30, 30A, 30B) in the external circulation air duct (12, 12A, 12B) are guided by the air guide cover (80B) to the auxiliary air port (19B).

5. The temperature-adjustable outdoor air fryer according to claim 1, wherein a hot air circulation system (520) communicating with the cooking cavity (511) is provided in the shell (510); the drive motor (561) has a forward drive state and a reverse drive state, and the shell (510) is provided with an air vent (513) communicating with the external circulation air duct (512).

6. The temperature-adjustable outdoor air fryer according to claim 5, wherein the drive motor (561) is a variable-speed motor, and the drive motor (561) is in driving connection with the temperature-control fan (514).

7. The temperature-adjustable outdoor air fryer according to claim 5, wherein the air vent (513) comprises a first air vent (5131) and a second air vent (5132), the first air vent (5131) and the second air vent (5132) are provided at two ends of the external circulation air duct (512) respectively, the first air vent (5131) is provided adjacent to the heat generating source (530), the second air vent (5132) is provided adjacent to the temperature-control fan (514), and the temperature-control fan (514) is of a structure with spiral fan blades.

8. The temperature-adjustable outdoor air fryer according to claim 1, wherein a circulation air duct (612) communicating with the cooking cavity (611) is provided outside the cooking cavity (611), the shell (610) is provided with an air vent (613) communicating with the circulation air duct (612); the circulation air duct (612) or the cooking cavity (611) is provided therein with the temperature-control fan (615) connected to the drive system (630), and air heated by the heat generating source (614) in the circulation air duct (612) is adapted to be driven by the temperature-control fan (615) to the cooking cavity (611).

9. The temperature-adjustable outdoor air fryer according to claim 8, wherein the drive motor (631) is a variable-speed motor.

10. The temperature-adjustable outdoor air fryer according to claim 8, wherein the air vent (613) is provided at a bottom of the shell (610), support legs (617) extending downwards and a detachable bottom plate (640) are provided at the bottom of the shell (610), and the shell (610) is configured to be suspended above the bottom plate (640) through the support legs (617).

11. The temperature-adjustable outdoor air fryer according to claim 8, wherein the circulation air duct (612) is provided therein with a smoke dust filtering device (650) configured to allow an airflow to pass therethrough, a periphery of the smoke dust filtering device (650) fits with an inner wall of the circulation air duct (612), wherein heat flow heated by the heat generating source (614) in the circulation air duct (612) is adapted to flow through the smoke dust filtering device (650) and enter the cooking cavity (611), and the smoke dust filtering device (650) is detachably provided in the circulation air duct (612).

12. The temperature-adjustable outdoor air fryer according to claim 1, wherein the shell (710) is provided with an air outlet (715) communicating with the cooking cavity (711) and an external space, the drive motor (750) is a variable-speed motor, the shell (710) is provided therein with a hot air circulation system (720) communicating with the cooking cavity (711), the hot air circulation system (720) comprises the temperature-control fan (721).

13. The temperature-adjustable outdoor air fryer according to any one of claims 1 to 12, wherein the heat generating source (30, 30A, 30B, 530, 614, 730) is detachably provided in the circulation air duct (12, 12A, 12B, 512, 612, 712) beside and/or below the cooking cavity (11, 511, 611, 711), and is configured to cooperate with the outer wall of the cooking cavity (11, 511, 611, 711) through thermal transfer, and the heat generating source (30, 30A, 30B, 530, 614, 730) is coal, charcoal, alcohol, gas stove or wood.

14. The temperature-adjustable outdoor air fryer according to any one of claims 1 to 13, wherein a frying pot (70, 515, 515A, 780) is detachably provided in the shell (10, 10A, 10B, 510, 710), a handle (72, 782) is provided on a side or a top of the frying pot (70, 515, 515A, 780), an outer wall of the frying pot (70, 515, 515A, 780) at least partially constitutes the outer wall of the cooking cavity (11, 510, 711), the heat generating source (30, 30A, 30B, 530, 730) is provided to be sandwiched between the frying pot (70, 515, 515A, 780) and the shell (10, 10A, 10B, 510, 710), and a food tray or a food basket (517A) is provided in the frying pot (70, 515, 515A).

15. The temperature-adjustable outdoor air fryer according to any one of claims 1 to 14, wherein the shell (510) is provided thereon with a solar power supply system (570) and a charging jack (518), the solar power supply system (570) is configured to be electrically connected to the charging jack (518) and the control system (540).
